# EUROPEAN PATENT APPLICATION

(11) **EP 4 335 658 A1**
(43) Date of publication of application: **13.03.2024**
(21) Application number: 23193044.7
(22) Date of filing: 23.08.2023
(51) Int. Cl.: B60C 1/00, B60C 11/00

(54) **TIRE**

(30) Priority: 06.09.2022 JP 2022141728
(71) Applicant: Sumitomo Rubber Industries, Ltd., Kobe-shi, Hyogo 651-0072 (JP)
(72) Inventor: KAJITA, Hisataka, Kobe-shi, Hyogo, 651-0072 (JP)
(74) Representative: Manitz Finsterwald Patent- und Rechtsanwaltspartnerschaft mbB

(57) **Abstract**

Provided is a tire comprising a tread part, wherein the tread part has a first layer (6) constituting a tread surface and a second layer (7), wherein the first layer and the second layer are each composed of a rubber composition comprising a rubber component and a vulcanized rubber particle, wherein, in a cut section parallel to the tread surface of the first layer, a ratio R₁ of a domain area derived from the vulcanized rubber particle to an area of the entire cut section is 0.05 or more and less than 0.50, wherein, in a cut section parallel to a tread surface of the second layer, a ratio R₂ of a domain area derived from the vulcanized rubber particle to an area of the entire cut section is greater than 0.05 and 0.50 or less, and wherein R₂ is larger than R₁.

## Description

### TECHNICAL FIELD

The present invention relates to a tire.

### BACKGROUND OF THE INVENTION

Black ice (a frozen road surface with a thin layer of ice on a snowless road surface) may make it difficult for drivers to see visually and easily cause tire slippage, etc. Even in black ice, it is desirable to exhibit a good responsiveness or steering stability without slipping during cornering.

JP 2017-203111 A describes a winter tire having excellent on-ice performance and fuel efficiency.

### SUMMARY OF THE INVENTION

In order to obtain a good responsiveness or steering stability on a frozen road surface, it is conceivable to improve heat generation of a tread part, but heat generated by friction between the tread surface and an icy road surface melts ice to form a water film between the tread surface and the road surface, leading to a concern that slippage may occur.

It is an object of the present invention to provide a tire capable of improving on-ice grip performance.

The present invention provides a tire comprising a tread part, wherein the tread part has a first layer constituting a tread surface and a second layer adjacent to the inner side of the first layer in a tire radial direction, wherein the first layer and the second layer are each composed of a rubber composition comprising a rubber component and a vulcanized rubber particle, wherein, in a cut section parallel to the tread surface of the first layer, a ratio R₁ of a domain area derived from the vulcanized rubber particle to an area of the entire cut section is 0.05 or more and less than 0.50, wherein, in a cut section parallel to a tread surface of the second layer, a ratio R₂ of a domain area derived from the vulcanized rubber particle to an area of the entire cut section is greater than 0.05 and 0.50 or less, and wherein R₂ is larger than R₁.

According to the present invention, on-ice grip performance of a tire can be improved.

### BRIEF DESCRIPTION OF THE DRAWINGS

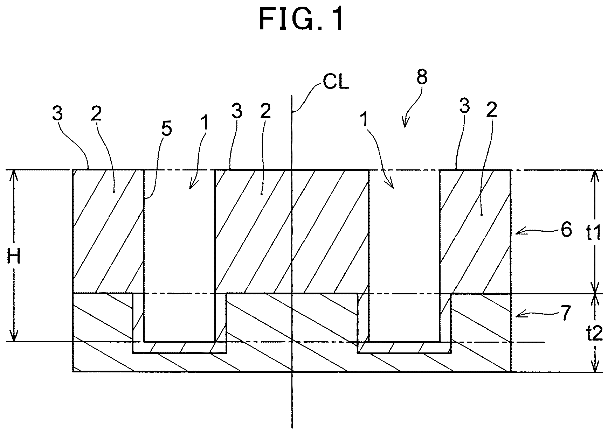

FIG. 1 is an enlarged cross-sectional view showing a part of a tread of a tire according to one embodiment of the present invention.

### DETAILED DESCRIPTION

The tire that is one embodiment of the present invention is a tire comprising a tread part, wherein the tread part has a first layer constituting a tread surface and a second layer adjacent to the inner side of the first layer in a tire radial direction, wherein the first layer and the second layer are each composed of a rubber composition comprising a rubber component and a vulcanized rubber particle, wherein, in a cut section parallel to the tread surface of the first layer, a ratio R₁ of a domain area derived from the vulcanized rubber particle to an area of the entire cut section is 0.05 or more and less than 0.50, wherein, in a cut section parallel to a tread surface of the second layer, a ratio R₂ of a domain area derived from the vulcanized rubber particle to an area of the entire cut section is greater than 0.05 and 0.50 or less, and wherein R₂ is larger than R₁.

By laminating two or more rubber layers on the tread part and making a ratio of a domain area derived from the vulcanized rubber particle to an area of the entire cut section of the tread of the outermost layer (first layer) smaller than a ratio of a domain area derived from the vulcanized rubber particle to an area of the entire cut section of the tread of the second layer from the tread surface, on-ice grip performance of the obtained tire is remarkably improved. The reason for that is not intended to be bound by any theory, but is considered as follows.

By compounding the vulcanized rubber particle in the first layer of the tread part, a domain of the vulcanized rubber particle is formed, and due to friction at an interface between the vulcanized rubber particle and a rubber matrix, heat is generated, and an effect of hooking due to the vulcanized rubber particle is obtained, so that frictionality at the tread surface against a road surface is improved. Moreover, by compounding the vulcanized rubber particle in the second layer, heat generation can be obtained due to friction at an interface between the vulcanized rubber particle and a rubber matrix, as in the case for the first layer.

Here, in the first layer, if the ratio of the domain of the vulcanized rubber particle is too large, there are concerns that the domain may become difficult to bite into an icy road surface and that an excessive heat generation may melt ice on the road surface to form a water film. Therefore, by making the ratio of the domain area derived from the vulcanized rubber particle to the area of the entire cut section of the tread of the first layer smaller than the ratio of the domain area derived from the vulcanized rubber particle to the area of the entire cut section of the tread of the second layer, heat generation is obtained in the entire tread part, and an effect of hooking on the tread surface is added, so that it is considered that friction between the tread surface and the icy road surface can be easily generated. In addition, it is considered that, with cooperation of these features, a notable effect of improving on-ice grip performance is achieved.

A ratio (t1/t2) of a thickness t1, in mm, of the first layer to a thickness t2, in mm, of the second layer is preferably less than 19.

When t1/t2 is set within the above-described range and the ratio of the second layer is set to a certain value or more, it becomes easy to obtain an energy loss effect between a vulcanized rubber particle and a rubber molecular chain in the second layer, so that it is considered that grip performance on an icy road surface can be easily improved.

A tan δ at 30°C (30°C tan δ) of the first layer is preferably 0.09 or more and 0.21 or less.

When 30°C tan δ of the first layer is 0.21 or less, the temperature of the first layer constituting the tread surface is suppressed from increasing during running, and melting of ice when the tire touches an icy road surface can be easily suppressed, so that it is considered that grip performance on the icy road surface can be easily improved. Moreover, when 30°C tan δ of the first layer is 0.09 or more, a moderate heat is applied to the domain of the vulcanized rubber particle, so that it is considered that the domain can easily bite into ice.

The rubber component constituting the first layer preferably comprises a styrene-butadiene rubber. Moreover, a total styrene amount in the rubber component constituting the first layer is preferably 20% by mass or less.

When the rubber component constituting the first layer comprises a styrene-butadiene rubber, minute domains derived from a styrene part are formed in the rubber layer, so that it is considered that a frictional force can be easily obtained by heat generation due to friction between these domains and other molecular chains and hooking of the domain derived from the styrene part on the road surface. Moreover, when the total styrene amount in the rubber component constituting the first layer is set within the above-described range, it is considered that domains derived from the styrene part can be easily formed in a system.

A glass transition temperature of the first layer is preferably -30°C or higher and -10°C or lower.

When the glass transition temperature of the first layer is -10°C or lower, a rubber state can be kept even on a low-temperature icy road surface, a rubber matrix part acts as a soft phase, and a vulcanized rubber particle, a styrene domain part, and the like act as a hard phase, so that it is considered that a hooking effect on the road surface can be easily obtained. Moreover, when the glass transition temperature of the first layer is -30°C or higher, the rubber matrix can be suppressed from excessively becoming soft in a low-temperature environment, so that it is considered that a reaction force can be easily obtained.

A tan δ at 70°C (70°C tan δ) of the second layer is preferably 0.10 or less.

The temperature of the second layer becomes higher than an outside air temperature due to heat accumulation during running, etc. Therefore, it is considered that an excessive temperature rise in the second layer can be suppressed by setting 70°C tan δ of the second layer to 0.10 or less to reduce heat generation of the second layer. From this, heat generated in the second layer can be suppressed from transmitting to the first layer which melts ice, so that it is considered that on-ice grip performance becomes easy to be improved.

A product of the ratio (t1/t2) of the thickness t1, in mm, of the first layer to the thickness t2, in mm, of the second layer and R₁ (R₁ × (t1/t2)) is preferably 0.25 or less.

It is considered that, due to the vulcanized rubber particle in the first layer, friction by the first layer can be easily generated, as mentioned above. On the other hand, it is considered that heat accumulation in the first layer facilitates melting of ice on a road surface. Therefore, when the product of the ratio R₁ of the area occupied by the vulcanized rubber particle in the first layer and the ratio (t1/t2) of the thickness of the first layer to the thickness of the second layer (R₁ × (t1/t2)) is set to a certain level or less, it is considered that heat generation and heat accumulation in the first layer can be easily suppressed.

A total content of a butadiene rubber and a styrene-butadiene rubber in the rubber component constituting the first layer is preferably 75% by mass or more.

When the total content of the butadiene rubber and the styrene-butadiene rubber in the rubber component constituting the first layer is set within the above-described range, it is considered that domains derived from the styrene part can be easily formed in the system.

A total content of silica and carbon black based on 100 parts by mass of the rubber component in the rubber composition constituting the first layer is preferably 60 parts by mass or less.

When the total content of silica and carbon black in the rubber composition constituting the first layer is set within the above-described ranges, the rubber layer as a whole is suppressed from being hardened by silica and carbon black, and distribution of hardness in a microscopic region can be generated, so that it is considered that a domain generated in the rubber layer can be easily hooked on a road surface.

The rubber composition constituting the first layer preferably comprises at least one selected from a group consisting of a terpene-based resin and a cyclopentadiene-based resin.

By compounding a terpene-based resin and/or a cyclopentadiene-based resin into the rubber composition, water repellency of the tread rubber can be improved, and it is considered that wet grip performance can be improved by using this rubber composition for the first layer.

A Shore hardness (Hs) of the second layer is preferably 50 or more and 80 or less.

When the Shore hardness (Hs) of the second layer is set within the above-described range, it is considered that it becomes easier to obtain a good macro followability.

A modulus of the first layer at 100% stretching is preferably larger than a modulus of the second layer at 100% stretching.

When the modulus of the first layer at 100% stretching is larger than the modulus of the second layer at 100% stretching, deformation generated in the first layer becomes easily transmitted to the second layer, so that it is considered that an internal energy loss during shear deformation becomes easily generated. Moreover, the modulus of the second layer at 100% stretching is preferably 0.5 MPa or more from the viewpoint of effects of the present invention.

It is preferable that the tread part has circumferential grooves extending continuously in a tire circumferential direction and that a ratio (t1/H) of t1 to a groove depth H of the deepest part of the circumferential groove is 0.35 to 0.95.

When t1/H is set within the above-described range, shear deformation becomes easily generated even in the second layer, so that it is considered that an energy loss between layers can be easily obtained.

<Definition>

A "tread part" is a part that forms a grounding surface of a tire, and in a case where the tire comprises a member that forms a tire skeleton from steel or a textile material such as a belt layer, a belt reinforcing layer, a carcass layer, and the like, in a cross section in a tire radial direction, a member on an outer side therefrom in the tire radial direction.

A "standardized rim" is a rim in a standard system including a standard, on which the tire is based, defined for each tire by the standard, i.e., a "standard rim" in JATMA, "Measuring Rim" in ETRTO, or "Design Rim" in TRA, to which references are made in this order, and if there is an applicable size at the time of the reference, the rim conforms to its standard.

A "cut section parallel to a tread surface" shall mean a cut section parallel to a surface in contact with a tread surface on a tire center line.

A "circumferential groove" is a groove extending continuously in a tire circumferential direction, and shall refer to a recess having an opening width of at least greater than 2.0 mm on a tread surface.

A "groove depth H of a circumferential groove" shall refer to a distance between a tread surface and a deepest part of a groove bottom of a circumferential groove. Besides, regarding a groove depth H, when there are a plurality of circumferential grooves, a groove depth of a circumferential groove having the deepest groove depth is handled as a "groove depth H of the circumferential groove".

A "thickness of each rubber layer constituting a tread part" refers to a thickness of each rubber layer on a tire equatorial plane in a cross section obtained by cutting a tire along a plane including a tire rotation axis. For example, a thickness of a first layer refers to a linear distance in a tire radial direction from an outermost surface of a tread to an interface of the first layer on an inner side in a tire radial direction, on a tire equatorial plane. Besides, when the tire has a circumferential groove on the tire equatorial plane, a thickness of each rubber layer constituting a tread part shall be a thickness of each rubber layer at a central part of a land part in a tire width direction closest to a tire equatorial plane. A "land part closest to a tire equatorial plane" shall refer to a land part having a groove edge closest to the tire equatorial plane of the circumferential groove on the tire equatorial plane, and in a case where such land part is present on both lateral sides in a tire width direction, a thickness of each rubber layer constituting a tread part shall be an average value of thicknesses of rubber layers at the central parts of the two land parts in the tire width direction. In addition, in a case where an electrically conductive member or the like is present on a land part on a tire equatorial plane and an interface is unclear, a thickness shall be measured with interfaces blocked by the electrically conductive member or the like being virtually joined together.

A "softening agent" is a material that imparts plasticity to a rubber component, which is a component extracted from a rubber composition using acetone. The softening agent includes a softening agent that is liquid (in a liquid state) at 25°C and a softening agent that is solid at 25°C. However, it does not comprise wax and stearic acid commonly used in the tire industry.

A "content of a softening agent" also includes an amount of a softening agent contained in an extended rubber component previously extended with the softening agent such as oil, a resin component, a liquid rubber component, and the like. The same applies to a content of oil, a content of a resin component, and a content of a liquid rubber, for example, an extending oil is included in the content of oil when an extending component is oil.

### <Measuring method>

A "domain area derived from a vulcanized rubber particle in a cut section parallel to a tread surface of each rubber layer constituting a tread part" can be calculated, for example, by observing a vulcanized rubber test piece cut out from a tread part with a scanning electron microscope (Scanning Electron Microscope: SEM) or the like. Specifically, for example, each rubber test piece after vulcanization is cut out with 20 mm in length × 30 mm in width × 2 mm in thickness from a tread part of a tire so that a tire circumferential direction becomes on a long side. The obtained rubber test piece is placed on a scanning electron microscope (Teneo, manufactured by Thermo Fisher Scientific K.K.) so that a surface parallel to a tread surface becomes a cross section for observation and imaged at an acceleration voltage of 15 kV to obtain an electron microscope image at a magnification of 50 times. Then, in a range of 2.54 mm × 1.69 mm of the obtained image, a domain area derived from a vulcanized rubber particle is calculated, and a ratio of the area occupied to an area of the entire cut section is calculated. This measuring method is performed for 3 fields of view per sample, averaging the measurements to calculate a R₁ and a R₂ from the average value.

A "thickness of each rubber layer constituting a tread part" is measured in a state where a tire is cut at a plane including a tire rotation axis and a width of a bead part is adjusted to a width of a standardized rim.

"30°C tan δ" is a loss tangent measured under a condition of a frequency of 10 Hz, an initial strain of 5%, a dynamic strain of ±1%, and an elongation mode. A sample for measuring 30°C tan δ is a vulcanized rubber composition with 20 mm in length × 4 mm in width × 1 mm in thickness. When it is produced by being cut out from a tire, it is cut out from a tread part of the tire so that a tire circumferential direction becomes a long side and a tire radial direction becomes a thickness direction.

"70°C tan δ" is a loss tangent measured under a condition of a temperature at 70°C, a frequency of 10 Hz, an initial strain of 10%, a dynamic strain of ±1%, and an elongation mode. A sample for measuring 70°C tan δ is produced in the same manner as in the case for the 30°C tan δ.

A "glass transition temperature (Tg) of a rubber layer" is determined by measuring a temperature distribution curve of a tan δ in a range of -60°C to 40°C under a condition of a frequency of 10 Hz, an initial strain of 1%, an amplitude of ± 0.1%, and a temperature rising rate at 3°C/min, using a dynamic viscoelasticity measuring device (e.g., EPLEXOR series manufactured by gabo Systemtechnik GmbH), with a temperature corresponding to the largest tan δ value (tan δ peak temperature) in the obtained temperature distribution curve being as Tg. In the range of -60°C to 40°C, if there are two maximum values of tan δ, a value having a lower temperature shall be Tg. Moreover, in the range of -60°C to 40°C, if a temperature distribution curve is obtained in which a tan δ gradually decreases with increasing temperature, Tg shall be -60°C according to the above-mentioned definition. A sample for the measurement is produced in the same manner as in the case for the 30°C tan δ.

A "Shore hardness" is a Shore hardness (Hs) measured under a condition of a temperature at 23°C using a durometer type A in accordance with JIS K 6253-3: 2012. A sample for measuring the Shore hardness is produced by being cut out from a tread part so that a tire radial direction becomes a thickness direction. Moreover, the measurement is performed by pressing a measuring instrument against the sample from the grounding surface side of the sample for hardness measurement.

A "modulus at 100% stretching (M100)" is a tensile stress (MPa) at 100% stretching in a grain direction (a rolling direction when forming a rubber sheet by extrusion or shearing treatment) measured under a condition of a tensile speed of 3.3 mm/sec in an atmosphere at 23°C according to JIS K 6251: 2017. A sample for M100 measurement is a dumbbell-shaped No. 7 vulcanized rubber test piece with a thickness of 1 mm. When it is produced by being cut out from a tire, it is cut out from a tread part of the tire so that a tire circumferential direction becomes a tensile direction and a tire radial direction becomes a thickness direction.

A "styrene content" is a value calculated by ¹H-NMR measurement, and is applied to, for example, a rubber component having a repeating unit derived from styrene such as a SBR and the like.

A "vinyl content (1,2-bond butadiene unit amount)" is a value calculated by infrared absorption spectrometry according to JIS K 6239-2: 2017, and is applied to, for example, a rubber component having a repeating unit derived from butadiene such as a SBR, a BR, and the like.

A "cis content (cis-1,4-bond butadiene unit amount)" is a value calculated by infrared absorption spectrometry according to JIS K 6239-2: 2017, and is applied to, for example, a rubber component having a repeating unit derived from butadiene such as a BR and the like.

A "total styrene amount in a rubber component" is a total content (% by mass) of styrene units contained in 100 % by mass of a rubber component, which is a value obtained by multiplying a styrene content (% by mass) by a mass fraction in a rubber component to obtain a calculated value, for each of respective rubber components, and summing these values. Specifically, it is calculated by Σ(styrene content (% by mass) of each styrene unit-containing rubber × content (% by mass) of each styrene unit-containing rubber in rubber component / 100).

A "weight-average molecular weight (Mw)" can be calculated in terms of a standard polystyrene based on measurement values obtained by a gel permeation chromatography (GPC) (e.g., GPC-8000 Series manufactured by Tosoh Corporation, detector: differential refractometer, column: TSKGEL SUPERMULTIPORE HZ-M manufactured by Tosoh Corporation). For example, it is applied to a SBR, a BR, and the like.

A "nitrogen adsorption specific surface area (N₂SA) of carbon black" is measured according to JIS K 6217-2: 2017. A "nitrogen adsorption specific surface area (N₂SA) of silica" is measured by the BET method according to ASTM D3037-93.

A "softening point of a resin component" is a temperature at which a sphere drops when the softening point specified in JIS K 6220-1: 2001 is measured with a ring and ball softening point measuring device.

A procedure for producing a tire that is one embodiment of the present invention will be described in detail below. However, the following descriptions are illustrative for explaining the present invention, and are not intended to limit the technical scope of the present invention to this description range only.

### [Tire]

Hereinafter, the tire according to one embodiment of the present invention will be described with reference to the drawings. Besides, embodiments shown below are merely examples, and the tire of the present invention is not limited to the following embodiments.

FIG. 1 is an enlarged cross-sectional view showing a part of a tread of a tire. In FIG. 1, a vertical direction is a tire radial direction, a horizontal direction is a tire width direction, and a direction perpendicular to a paper surface is a tire circumferential direction.

As illustrated in FIG. 1, a tread part 8 of the tire according to the present embodiment comprises a first layer 6 and a second layer 7, an outer surface of the first layer 6 forming a tread surface 3 and the second layer 7 being adjacent to the inside of the first layer 6 in the tire radial direction. The first layer 6 typically corresponds to a cap tread. Since a typical shape of the second layer 7 has not been determined, the second layer 7 may be a base tread or under tread. Moreover, as long as the object of the present invention is achieved, one or more rubber layers may be further provided between the second layer 7 and a belt layer. When the tread part 8 has three or more layers, the cap tread or inner layer (base tread) may be composed of two or more layers. For example, when the cap tread has two layers, a rubber layer present inside in a tire radial direction, among the two layers of the cap tread, corresponds to the second layer of the present invention, and when the base tread has two layers, a rubber layer present outside in the tire radial direction, among the two layers of the base tread, corresponds to the second layer of the present invention.

In FIG. 1, the deepest part of the groove bottom of the circumferential groove 1 having the deepest groove depth among the plurality of circumferential grooves 1 is formed so as to be located inside in the tire radial direction with respect to the outermost part of the second layer 7 in the land part 2 adjacent to the circumferential groove. That is, the deepest part of the groove bottom of the circumferential groove 1 having the deepest groove depth among the plurality of circumferential grooves 1 is located inside in the tire radial direction with respect to an extension line of the outermost part of the second layer 7 in the land part 2 adjacent to the circumferential groove. Just under the circumferential groove 1 having the deepest groove depth among the plurality of circumferential grooves 1 (inside in the tire radial direction), a recessed part recessed inside in the tire radial direction with respect to the outermost part of the second layer 7 in the land part 2 adjacent to the circumferential groove is provided, where a part of the first layer 6 with a predetermined thickness is formed in the recessed part of the second layer 7.

In FIG. 1, groove widths of the circumferential grooves 1 are constant from outside to inside in the tire radial direction, though the present invention is not limited to such an aspect, and the groove widths may vary from outside to inside in the tire radial direction. Moreover, a groove wall 5 of the circumferential groove extends linearly from outside to inside in the tire radial direction, though the present invention is not limited to such an aspect, and the groove wall 5 may extend in, for example, a curved shape or a stepped shape.

In the present embodiment, the thickness t1 of the first layer 6 is, but not particularly limited to, preferably 1.0 mm or more, more preferably 1.5 mm or more, further preferably 2.0 mm or more, particularly preferably 2.5 mm or more, from the viewpoint of steering stability. On the other hand, the thickness t1 of the first layer 6 is preferably 13.0 mm or less, more preferably 11.0 mm or less, further preferably 9.0 mm or less, from the viewpoint of heat generation.

In the present embodiment, the thickness t2 of the second layer 7 is, but not particularly limited to, preferably 0.3 mm or more, more preferably 0.6 mm or more, further preferably 0.9 mm or more, particularly preferably 1.2 mm or more. Moreover, the thickness t2 of the second layer 7 is preferably 10.0 mm or less, more preferably 9.0 mm or less, further preferably 8.0 mm or less, particularly preferably 7.0 mm or less.

The ratio (t1/t2) of the thickness t1 of the first layer 6 to the thickness t2 of the second layer 7 is preferably less than 19, more preferably less than 10, further preferably less than 8.0, particularly preferably less than 6.0. When t1/t2 is set within the above-described ranges and the ratio of the second layer is set to a certain value or more, it becomes easy to obtain an energy loss effect between a vulcanized rubber particle and a rubber molecular chain in the second layer, so that it is considered that grip performance on an icy road surface can be easily improved. Moreover, t1/t2 is preferably 0.10 or more, more preferably 0.20 or more, further preferably 0.30 or more, particularly preferably 0.40 or more. When t1/t2 is set within the above-described ranges, it is considered that a force generated by friction on the tread surface can be more easily transmitted to the inside of the tire.

The ratio (t1/H) of t1 to the groove depth H, in mm, of the deepest part of the circumferential groove is preferably 0.20 or more, more preferably 0.30 or more, further preferably 0.35 or more. On the other hand, t1/H is preferably 2.0 or less, more preferably 1.5 or less, further preferably 1.0 or less, further preferably 0.95 or less, particularly preferably 0.90 or less. When t1/H is set within the above-described ranges, shear deformation becomes easily generated even in the second layer, so that it is considered that an energy loss between layers can be easily obtained.

30°C tan δ of the first layer 6 is preferably 0.25 or less, more preferably 0.23 or less, further preferably 0.21 or less, particularly preferably 0.19 or less. When 30°C tan δ of the first layer 6 is set within the above-described ranges, the temperature of the first layer constituting the tread surface is suppressed from increasing during running, and melting of ice when the tire touches an icy road surface can be easily suppressed, so that it is considered that grip performance on the icy road surface can be easily improved. On the other hand, 70°C tan δ of the first layer 6 is preferably 0.09 or more, more preferably 0.10 or more, further preferably 0.11 or more, particularly preferably 0.12 or more, from the viewpoint of imparting a moderate heat to a domain of a vulcanized rubber particle to make it easier to bite into ice.

70°C tan δ of the second layer 7 is preferably 0.25 or less, more preferably 0.20 or less, further preferably 0.15 or less, particularly preferably 0.10 or less, from the viewpoint of on-ice grip performance. On the other hand, 70°C tan δ of the second layer 7 is preferably 0.03 or more, more preferably 0.04 or more, further preferably 0.05 or more, particularly preferably 0.06 or more, from the viewpoint of obtaining an energy loss in the second layer.

A tan δ of each rubber layer can be appropriately adjusted depending on types and compounding amounts of a rubber component, a filler, a softening agent, a vulcanizing agent, a vulcanization accelerator, and the like, which will be described below. For example, when a total styrene amount in the rubber component is increased, a value of tan δ tends to increase. Moreover, when a compounding amount of a filler (in particular, carbon black) or a resin component is increased, a value of tan δ tends to increase.

The Tg of the first layer 6 is preferably -30°C or higher, more preferably -28°C or higher, further preferably -26°C or higher. When the glass transition temperature of the first layer 6 is set within the above-described ranges, the rubber matrix can be suppressed from excessively becoming soft in a low-temperature environment, so that it is considered that a reaction force can be easily obtained. Moreover, the Tg of the first layer 6 is preferably -10°C or lower, more preferably -15°C or lower. When the glass transition temperature of the first layer 6 is set within the above-described ranges, a rubber state can be kept even on a low-temperature icy road surface, a rubber matrix part acts as a soft phase, and a vulcanized rubber particle, a styrene domain part, and the like act as a hard phase, so that it is considered that a hooking effect on the road surface can be easily obtained. The Tg of the second layer 7 is preferably -30°C or higher, more preferably -28°C or higher, further preferably -26°C or higher. On the other hand, an upper limit value of the Tg of the second layer 7 is, but not particularly limited to, preferably 20°C or lower, more preferably 15°C or lower, further preferably 10°C or lower, particularly preferably 5°C or lower. Besides, the Tg of each rubber layer can be appropriately adjusted depending on types and compounding amounts of a rubber component and the like which will be described below.

The Shore hardness (Hs) of the first layer 6 is preferably 80 or less, more preferably 75 or less, further preferably 70 or less. Moreover, the Shore hardness (Hs) of the second layer 7 is preferably 80 or less, more preferably 75 or less, further preferably 70 or less. When the Shore hardness (Hs) of each of the first layer 6 and the second layer 7 is set within the above-described ranges, it is considered that a reaction force can be easily obtained without impairing followability to a road surface. On the other hand, the shore hardness (Hs) of each of the first layer 6 and the second layer 7 is preferably 50 or more, more preferably 55 or more, further preferably 60 or more, from the viewpoint of maintaining block rigidity of a tire. Besides, a rubber hardness of each rubber layer can be appropriately adjusted depending on types and compounding amounts of a rubber component, a filler, a softening agent, and the like, which will be described later.

The modulus (M100) of the first layer 6 at 100% stretching is preferably 0.5 MPa or more, more preferably 1.0 MPa or more, further preferably 1.4 MPa or more, particularly preferably 1.8 MPa or more. Moreover, the modulus of the second layer 7 at 100% stretching is preferably 0.4 MPa or more, more preferably 0.8 MPa or more, further preferably 1.2 MPa or more, particularly preferably 1.6 MPa or more. Besides, an upper limit value of the modulus of each of the first layer 6 and the second layer 7 at 100% stretching is, but not particularly limited to, usually 4.0 MPa or less, preferably 3.5 MPa or less. In the present embodiment, the modulus of the first layer 6 at 100% stretching is preferably larger than the modulus of the second layer 7 at 100% stretching. When the modulus of the first layer at 100% stretching is larger than the modulus of the second layer at 100% stretching, deformation generated in the first layer becomes easily transmitted to the second layer, so that it is considered that an internal energy loss during shear deformation becomes easily generated. A difference between the modulus of the first layer 6 at 100% stretching and the modulus of the second layer 7 at 100% stretching is preferably 0.1 MPa or more, more preferably 0.2 MPa or more, further preferably 0.3 MPa or more. Besides, the modulus of each rubber layer at 100% stretching can be appropriately adjusted depending on types and compounding amounts of a rubber component, a filler, a softening agent, and the like, which will be described later.

The product of the ratio (t1/t2) of the thickness t1, in mm, of the first layer 6 to the thickness t2, in mm, of the second layer 7 and R₁ (R₁ × (t1/t2)) is preferably 0.90 or less, more preferably 0.60 or less, further preferably 0.30 or less, further preferably 0.25 or less, further preferably 0.20 or less, particularly preferably 0.15 or less, from the viewpoint of suppressing heat generation and heat accumulation of the first layer. Moreover, R₁ × (t1/t2) is preferably 0.010 or more, more preferably 0.020 or more, further preferably 0.030 or more. When R₁ × (t1/t2) is set within the above-described ranges, it is considered that a frictional force on the tread surface can be ensured, and the force can be easily transmitted to the inside of the tire.

### [Rubber composition]

The tread part according to the present embodiment consists of two or more rubber layers, characterized in that a rubber composition constituting a first layer and a rubber composition constituting a second layer each comprises a vulcanized rubber particle. The rubber composition constituting each layer of the tread part can be produced depending on a required ratio of a domain area derived from the vulcanized rubber particle to an area of the entire cut section of the tread, etc., using raw materials which will be described below. The rubber composition according to the present embodiment will be described below, but it shall be applicable to any rubber layer of the tread part according to the present embodiment, unless otherwise specified.

### <Rubber component>

In the rubber composition according to the present embodiment, a diene-based rubber is appropriately used as a rubber component, and the rubber composition preferably comprises at least one selected from the group consisting of an isoprene-based rubber, a styrene-butadiene rubber (SBR), and a butadiene rubber (BR). These rubber components may be used alone, or two or more thereof may be used in combination. Moreover, these rubber components may be modified rubbers treated with modifying groups capable of interacting with fillers such as carbon black, silica, and the like, or may be hydrogenated rubbers obtained by hydrogenating a part of an unsaturated bond. Besides, the rubber component according to the present embodiment shall not comprise a vulcanized rubber particle which will be described below.

The rubber component constituting the first layer preferably comprises a SBR, more preferably comprises an isoprene-based rubber and a SBR. On the other hand, the rubber component constituting the second layer is not particularly limited, but can be, for example, a rubber component comprising a SBR, a rubber component comprising an isoprene-based rubber, or a rubber component comprising an isoprene-based rubber and a BR.

### (Isoprene-based rubber)

As an isoprene-based rubber, for example, those common in the tire industry can be used, such as an isoprene rubber (IR), a natural rubber, and the like. Examples of the natural rubber include a non-modified natural rubber (NR), as well as a modified natural rubber such as an epoxidized natural rubber (ENR), a hydrogenated natural rubber (HNR), a deproteinized natural rubber (DPNR), an ultra pure natural rubber, a grafted natural rubber, and the like. These isoprene-based rubbers may be used alone, or two or more thereof may be used in combination.

The NR is not particularly limited, and those common in the tire industry can be used, examples of which include, for example, SIR20, RSS#3, TSR20, and the like.

A content of the isoprene-based rubber in the rubber component constituting the first layer is preferably 50% by mass or less, more preferably 45% by mass or less, further preferably 40% by mass or less, particularly preferably 35% by mass or less, from the viewpoint of the effects of the present invention. Moreover, a lower limit value of the content can be, but not particularly limited to, for example, 1% by mass or more, 3% by mass or more, 5% by mass or more, or 10% by mass or more.

A content of the isoprene-based rubber in the rubber component constituting the second layer is preferably 90% by mass or less, more preferably 80% by mass or less, further preferably 70% by mass or less, particularly preferably 60% by mass or less, from the viewpoint of the effects of the present invention. Moreover, a lower limit value of the content can be, but not particularly limited to, for example, 1% by mass or more, 3% by mass or more, 5% by mass or more, or 10% by mass or more.

### (SBR)

The SBR is not particularly limited, examples of which include unmodified solution-polymerized SBR (S-SBR) and emulsion-polymerized SBR (E-SBR), modified SBRs (a modified S-SBR, a modified E-SBR) thereof, and the like. Examples of the modified SBR include a SBR modified at its terminal and/or main chain, a modified SBR coupled with tin, a silicon compound, etc. (a modified SBR of condensate or having a branched structure, etc.), and the like. Among them, a S-SBR and a modified SBR are preferable. Furthermore, hydrogenated ones of these SBRs (hydrogenated SBRs) and the like can also be used. These SBRs may be used alone, or two or more thereof may be used in combination.

As the SBR, an extended SBR can be used, or a non-extended SBR can be used. An extending amount of the extended SBR, i.e., a content of an extending softening agent contained in the SBR when used is preferably 10 to 50 parts by mass based on 100 parts by mass of a rubber solid content of the SBR.

The SBRs listed above may be used alone, or two or more thereof may be used in combination. As the SBRs listed above, for example, those commercially available from Sumitomo Chemical Co., Ltd., JSR Corporation, Asahi Kasei Corporation, Zeon Corporation, ZS Elastomer Co., Ltd., etc. can be used.

A styrene content of the SBR can be appropriately selected so that a total styrene amount in the rubber component satisfies ranges which will be described below, but it is preferably 35% by mass or less, more preferably 30% by mass or less, further preferably 28% by mass or less, particularly preferably 25% by mass or less. Moreover, the styrene content of the SBR is preferably 5% by mass or more, more preferably 7% by mass or more, further preferably 10% by mass or more, further preferably 13% by mass or more, particularly preferably 16% by mass or more. Besides, the styrene content of the SBR is measured by the above-described measuring method.

A vinyl content of the SBR is preferably 5 mol% or more, more preferably 10 mol% or more, further preferably 15 mol% or more, from the viewpoints of ensuring reactivity with silica and abrasion resistance. Moreover, the vinyl content of the SBR is preferably 70 mol% or less, more preferably 65 mol% or less, further preferably 60 mol% or less, from the viewpoints of elongation at break and abrasion resistance. Besides, in the present specification, the vinyl content of the SBR is measured by the above-described measuring method.

A weight-average molecular weight (Mw) of the SBR is preferably 200,000 or more, more preferably 250,000 or more, from the viewpoint of steering stability. Moreover, it is preferably 2,000,000 or less, more preferably 1,800,000 or less, further preferably 1,500,000 or less, from the viewpoint of cross-linking uniformity. Besides, in the present specification, the weight-average molecular weight of the SBR is measured by the above-described measuring method.

A content of the SBR in the rubber component constituting the first layer can be appropriately selected so that a total styrene amount in the rubber component satisfies ranges which will be described below, but it is preferably 20% by mass or more, more preferably 40% by mass or more, further preferably 50% by mass or more, particularly preferably 60% by mass or more. On the other hand, the content is preferably 95% by mass or less, more preferably 90% by mass or less, further preferably 85% by mass or less, particularly preferably 80% by mass or less.

A content of the SBR in the rubber component constituting the second layer is preferably 5% by mass or more, more preferably 10% by mass or more, further preferably 15% by mass or more, particularly preferably 20% by mass or more, from the viewpoint of the effects of the present invention. On the other hand, an upper limit value of the content is not particularly limited.

### (BR)

The BR is not particularly limited, and those common in the tire industry can be used such as, for example, a BR having a cis content of less than 50% by mass (a low cis BR), a BR having a cis content of 90% by mass or more (a high cis BR), a rare-earth-based butadiene rubber synthesized using a rare-earth element-based catalyst (a rare-earth-based BR), a BR containing a syndiotactic polybutadiene crystal (a SPB-containing BR), a modified BR (a high cis modified BR, a low cis modified BR), and the like. These BRs may be used alone, or two or more thereof may be used in combination.

As the high cis BR, for example, those commercially available from Zeon Corporation, Ube Industries, Ltd., JSR Corporation, etc. can be used. When the high cis BR is compounded, low temperature characteristics and abrasion resistance can be improved. The cis content of the high cis BR is preferably 95% by mass or more, more preferably 96% by mass or more, further preferably 97% by mass or more. Besides, in the present specification, the cis content is measured by the above-described measuring method.

As a modified BR, a modified butadiene rubber (a modified BR) modified at its terminal and/or main chain with a functional group comprising at least one element selected from a group consisting of silicon, nitrogen, and oxygen can be appropriately used.

Examples of other modified BRs include those obtained by adding a tin compound after polymerizing 1,3-butadiene by a lithium initiator, the end of which is further bonded by tin-carbon bond (a tin-modified BR), and the like. Moreover, the modified BR may be either non-hydrogenated or hydrogenated.

A weight-average molecular weight (Mw) of the BR is preferably 300,000 or more, more preferably 350,000 or more, further preferably 400,000 or more, from the viewpoint of abrasion resistance. Moreover, it is preferably 2,000,000 or less, more preferably 1,000,000 or less, from the viewpoint of cross-linking uniformity. Besides, the weight-average molecular weight of the BR is measured by the above-described measuring method.

A content of the BR in the rubber component constituting the first layer is preferably 50% by mass or less, more preferably 40% by mass or less, further preferably 30% by mass or less, particularly preferably 20% by mass or less, from the viewpoint of the effects of the present invention. On the other hand, a lower limit value of the content can be, but not particularly limited to, for example, 1% by mass or more, 3% by mass or more, 5% by mass or more, or 10% by mass or more.

A content of the BR in the rubber component constituting the second layer is preferably 90% by mass or less, more preferably 80% by mass or less, further preferably 70% by mass or less, particularly preferably 60% by mass or less, from the viewpoint of the effects of the present invention. Moreover, a lower limit value of the content can be, but not particularly limited to, for example, 1% by mass or more, 3% by mass or more, 5% by mass or more, or 10% by mass or more.

A total content of the BR and the SBR in the rubber component constituting the first layer is preferably 60% by mass or more, more preferably 65% by mass or more, further preferably 70% by mass or more, further preferably 75% by mass or more, particularly preferably 80% by mass or more. On the other hand, an upper limit value of the total content of the BR and the SBR in the rubber component constituting the first layer is, but not particularly limited to, preferably 95% by mass or less, more preferably 90% by mass or less.

### (Other rubber components)

As the rubber components according to the present embodiment, rubber components other than the above-described isoprene-based rubbers, SBRs, and BRs may be compounded. As other rubber components, a crosslinkable rubber component commonly used in the tire industry can be used, examples of which include isoprene-based rubbers such as a styrene-isoprene rubber (SIR), a styrene-isoprene-butadiene rubber (SIBR), a chloroprene rubber (CR), and an acrylonitrile-butadiene rubber (NBR), diene-based rubbers other than a SBR and a BR; and rubber components other than the diene-based rubbers such as a butyl rubber (IIR), a halogenated butyl rubber, an ethylene propylene rubber, a polynorbornene rubber, a silicone rubber, a polyethylene chloride rubber, a fluororubber (FKM), an acryl rubber (ACM), a hydrin rubber, and the like. These other rubber components may be used alone, or two or more thereof may be used in combination. The rubber component according to the present embodiment comprises preferably 80% by mass or more, more preferably 90% by mass or more, further preferably 95% by mass or more, particularly preferably 98% by mass or more of a diene-based rubber, or may be a rubber component consisting only of a diene-based rubber. Moreover, besides the above-described rubber components, the rubber component may or may not comprise a known thermoplastic elastomer.

A total styrene amount in the rubber component constituting the first layer is preferably 24% by mass or less, more preferably 22% by mass or less, further preferably 20% by mass or less, particularly preferably 19% by mass or less, from the viewpoint of the effects of the present invention. Moreover, the total styrene amount in the rubber component constituting the first layer is preferably 4% by mass or more, more preferably 7% by mass or more, further preferably 10% by mass or more, particularly preferably 12% by mass or more, from the viewpoint of the effects of the present invention.

A total styrene amount in the rubber component constituting the second layer is preferably 35% by mass or less, more preferably 30% by mass or less, further preferably 25% by mass or less, from the viewpoint of the effects of the present invention. On the other hand, a lower limit value of the total styrene amount in the rubber component constituting the second layer can be, but not particularly limited to, for example, 1% by mass or more, 2% by mass or more, 3% by mass or more, or 4% by mass or more.

### <Vulcanized rubber particle>

The "vulcanized rubber particle" is a rubber composition obtained by a step different from that for the rubber matrix of the rubber composition according to the present embodiment, which forms a domain that is distinct from the rubber matrix of the rubber composition according to the present embodiment by image analysis such as SEM and the like. Generally, it is a recycled rubber, a powdered rubber, etc., which will be described later, but it is not limited thereto, and may be obtained by preparing and pulverizing a rubber composition different from the rubber composition according to the present embodiment depending on its intended use. The vulcanized rubber particle may be used alone, or two or more thereof may be used in combination.

The "recycled rubber" is one obtained by recycling a used rubber of automobile tires, tubes, and other rubber products specified in JIS K 6313: 2012, etc. and having equivalent properties therewith. Besides, powdery ones are excluded. In addition, the recycled rubber is desulfurized.

A type of the recycled rubber may be any of a tube recycled rubber, a tire recycled rubber, and other recycled rubbers, and a plurality of these types may be combined. Among them, a tire recycled rubber is preferable.

As the recycled rubber, those obtained by a known producing method can be used, and, for example, the most common pan method (oil method), as well as a method with a Banbury mixer/twin-screw reaction extruder, a microwave method, an ultrasonic method, an ultrasonic wave method, an electron beam irradiation method, and the like have been developed, but those produced by any method may be used. Moreover, commercially available recycled rubbers may be used. One of specific examples for producing a recycled rubber is a method of charging a vulcanized rubber powder into a closed type mixer or extruder, heating it to 100 to 250°C, treating it for 5 to 50 minutes while applying a mechanical shearing force to desulfurize it for recycling. As commercially available products, for example, those manufactured and sold by Muraoka Rubber Reclaiming Co., Ltd., ASAHI SAISEIGOMU Co., Ltd., etc. can be used.

The recycled rubber may be used alone, or two or more thereof may be used in combination.

The "powdered rubber" is a vulcanized powdered rubber obtained by recycling a waste rubber product. As a waste rubber used for a raw material of the powdered rubber, it is preferable to use a crushed tread rubber of a used tire, spews and burrs from reaping, etc. (crushed products of waste tires), from the viewpoints of environmental consideration and cost. Moreover, a rubber type of the waste rubber is not particularly limited, examples of which include diene-based rubbers such as a NR, a SBR, a BR, an IR, and the like. Besides, as the powdered rubber, a 30-mesh pass product or a 40-mesh pass product in Tyler mesh can be used. The powdered rubber may be used alone, or two or more thereof may be used in combination.

An average particle size of powdered rubbers is preferably 70 µm or more, more preferably 100 µm or more. The average particle size is preferably 1 mm or less, more preferably 750 µm or less. Besides, the average particle size of powdered rubbers in the present specification is an average particle size on a mass basis calculated from a particle size distribution measured in accordance with JIS Z 8815: 1994.

As the powdered rubber, for example, those manufactured and sold by Muraoka Rubber Reclaiming Co., Ltd., ASAHI SAISEIGOMU Co., Ltd., Lehigh Technologies, etc. can be used.

The rubber component in the vulcanized rubber particle has a content ratio of a natural rubber of preferably 40% by mass or more, more preferably 50% by mass or more, further preferably 60% by mass or more. When the content ratio of the natural rubber is within the above-described ranges, an excellent elongation at break tends to be obtained. The content ratio of the natural rubber is calculated by measurement using pyrolysis gas chromatography (PyGC).

In the cut section parallel to the tread surface of the first layer, the ratio R₁ of the domain area derived from the vulcanized rubber particle to the area of the entire cut section is 0.05 or more, preferably 0.06 or more, from the viewpoint of the effects of the present invention. Moreover, the R₁ is less than 0.50, preferably less than 0.40, more preferably less than 0.30, further preferably less than 0.25, further preferably less than 0.20, particularly preferably less than 0.15, from the viewpoint of the effects of the present invention.

In the cut section parallel to the tread surface of the second layer, the ratio R₂ of the domain area derived from the vulcanized rubber particle to the area of the entire cut section is greater than 0.05, preferably greater than 0.06, more preferably greater than 0.07, from the viewpoint of the effects of the present invention. Moreover, the R₂ is 0.50 or less, preferably 0.40 or less, more preferably 0.35 or less, further preferably 0.30 or less, further preferably 0.25 or less, particularly preferably 0.20 or less, from the viewpoint of the effects of the present invention.

The R₁ and the R₂ can be appropriately adjusted depending on compounding amounts of vulcanized rubber particles, average particle sizes, and the like. For example, when the compounding amounts of the vulcanized rubber particles to the rubber component are increased, the values of R₁ and R₂ tend to increase.

A content of the vulcanized rubber particle based on 100 parts by mass of the rubber component of the rubber composition constituting the first layer can be appropriately selected so that the R₁ satisfies the above-described ranges, but it is preferably 5 parts by mass or more, more preferably 6 parts by mass or more, further preferably 7 parts by mass or more. On the other hand, the content is preferably 70 parts by mass or less, more preferably 60 parts by mass or less, further preferably 50 parts by mass or less, further preferably 40 parts by mass or less, further preferably 30 parts by mass or less, particularly preferably 20 parts by mass or less.

A content of the vulcanized rubber particle based on 100 parts by mass of the rubber component of the rubber composition constituting the second layer can be appropriately selected so that the R₂ satisfies the above-described ranges, but it is preferably 5 parts by mass or more, more preferably 6 parts by mass or more, further preferably 7 parts by mass or more, particularly preferably 8 parts by mass or more. On the other hand, the content is preferably 70 parts by mass or less, more preferably 60 parts by mass or less, further preferably 50 parts by mass or less, further preferably 40 parts by mass or less, further preferably 30 parts by mass or less, particularly preferably 20 parts by mass or less.

### <Filler>

For the rubber composition according to the present embodiment, a filler comprising carbon black and/or silica is appropriately used. The rubber composition constituting the first layer preferably comprises silica as a filler, and more preferably comprises carbon black and silica. The rubber composition constituting the second layer preferably comprises carbon black as a filler.

### (Carbon black)

Carbon black is not particularly limited, and, for example, those commonly used in the tire industry such as GPF, FEF, HAF, ISAF, SAF, and the like can be used. Besides, in addition to carbon black produced by burning general mineral oil, carbon black using biomass materials such as lignin and the like may be used. These carbon black may be used alone, or two or more thereof may be used in combination.

A nitrogen adsorption specific surface area (N₂SA) of carbon black is preferably 10 m²/g or more, more preferably 30 m²/g or more, further preferably 50 m²/g or more, from the viewpoint of reinforcing property. Moreover, it is preferably 200 m²/g or less, more preferably 150 m²/g or less, further preferably 120 m²/g or less, from the viewpoints of fuel efficiency and processability. Besides, the N₂SA of carbon black is measured by the above-described measuring method.

A content of carbon black based on 100 parts by mass of the rubber component of the rubber composition constituting the first layer is preferably 1 part by mass or more, more preferably 3 parts by mass or more, further preferably 5 parts by mass or more, from the viewpoints of abrasion resistance and wet grip performance. Moreover, it is preferably 30 parts by mass or less, more preferably 20 parts by mass or less, further preferably 15 parts by mass or less, particularly preferably 9 parts by mass or less, from the viewpoint of 30°C tan δ.

A content of carbon black based on 100 parts by mass of the rubber component of the rubber composition constituting the second layer is preferably 10 parts by mass or more, more preferably 15 parts by mass or more, further preferably 20 parts by mass or more. Moreover, it is preferably 60 parts by mass or less, more preferably 50 parts by mass or less, further preferably 40 parts by mass or less, particularly preferably 35 parts by mass or less, from the viewpoint of 70°C tan δ.

### (Silica)

Silica is not particularly limited, and those common in the tire industry can be used, such as, for example, silica prepared by a dry process (anhydrous silica), silica prepared by a wet process (hydrous silica), and the like. Among them, hydrous silica prepared by a wet process is preferable from the reason that it has many silanol groups. Besides, in addition to the above-described silica, silica made of a biomass material such as rice husks may be appropriately used. These silica may be used alone, or two or more thereof may be used in combination.

A nitrogen adsorption specific surface area (N₂SA) of silica is preferably 120 m²/g or more, more preferably 150 m²/g or more, further preferably 170 m²/g or more, from the viewpoints of fuel efficiency and abrasion resistance. Moreover, it is preferably 350 m²/g or less, more preferably 300 m²/g or less, further preferably 250 m²/g or less, from the viewpoints of fuel efficiency and processability. Besides, the N₂SA of silica is measured by the above-described measuring method.

A content of silica based on 100 parts by mass of the rubber component of the rubber composition constituting the first layer is preferably 20 parts by mass or more, more preferably 30 parts by mass or more, further preferably 35 parts by mass or more, particularly preferably 40 parts by mass or more, from the viewpoint of wet grip performance. Moreover, it is preferably 90 parts by mass or less, more preferably 80 parts by mass or less, further preferably 70 parts by mass or less, particularly preferably 60 parts by mass or less, from the viewpoint of abrasion resistance. Besides, a content of silica based on 100 parts by mass of the rubber component of the rubber composition constituting the second layer is not particularly limited.

A total content of silica and carbon black based on 100 parts by mass of the rubber component of the rubber composition constituting the first layer is preferably 20 parts by mass or more, more preferably 30 parts by mass or more, further preferably 40 parts by mass or more, particularly preferably 50 parts by mass or more, from the viewpoint of abrasion resistance. Moreover, it is preferably 100 parts by mass or less, more preferably 90 parts by mass or less, further preferably 80 parts by mass or less, further preferably 70 parts by mass or less, further preferably 60 parts by mass or less, particularly preferably 55 parts by mass or less, from the viewpoints of fuel efficiency and elongation at break.

In the rubber composition constituting the first layer, it is preferable that the content of silica based on 100 parts by mass of the rubber component is larger than that of carbon black from the viewpoint of a balance of fuel efficiency, wet grip performance, and abrasion resistance. A ratio of a content of silica to a total content of silica and carbon black in the rubber composition constituting the first layer is preferably 60% by mass or more, more preferably 70% by mass or more, further preferably 80% by mass or more, particularly preferably 85% by mass or more. Besides, a ratio of a content of silica to a content of carbon black in the rubber composition constituting the second layer is not particularly limited.

### (Other fillers)

As fillers, other fillers may further be used in addition to carbon black and silica. Such filler is not particularly limited, and, for example, those commonly used in the tire industry can be compounded such as aluminum hydroxide, alumina (aluminum oxide), calcium carbonate, magnesium sulfate, talc, clay, biochar (BIOCHAR), and the like. These other fillers may be used alone, or two or more thereof may be used in combination.

### (Silane coupling agent)

Silica is preferably used in combination with a silane coupling agent. The silane coupling agent is not particularly limited, and any silane coupling agent conventionally used in combination with silica in the tire industry can be used, examples of which include, for example, mercapto-based silane coupling agents such as 3-mercaptopropyltrimethoxysilane, 3-mercaptopropyltriethoxysilane, 2-mercaptoethyltrimethoxysilane, 2-mercaptoethyltriethoxysilane, and the like; sulfide-based silane coupling agents such as bis(3-triethoxysilylpropyl)disulfide, bis(3-triethoxysilylpropyl)tetrasulfide, and the like; thioester-based silane coupling agents such as 3-octanoylthio-1-propyltriethoxysilane, 3-hexanoylthio-1-propyltriethoxysilane, 3-octanoylthio-1-propyltrimethoxysilane, and the like; vinyl-based silane coupling agents such as vinyltriethoxysilane, vinyltrimethoxysilane, and the like; amino-based silane coupling agents such as 3-aminopropyltriethoxysilane, 3-aminopropyltrimethoxysilane, 3-(2-aminoethyl)aminopropyltriethoxysilane, and the like; glycydoxy-based silane coupling agents such as γ-glycidoxypropyltriethoxysilane, γ-glycidoxypropyltrimethoxysilane, and the like; nitro-based silane coupling agents such as 3-nitropropyltrimethoxysilane, 3-nitropropyltriethoxysilane, and the like; chloro-based silane coupling agents such as 3-chloropropyltrimethoxysilane, 3-chloropropyltriethoxysilane, and the like; and the like. Among them, sulfide-based silane coupling agents and/or mercapto-based silane coupling agents are preferably compounded. As the silane coupling agent, for example, those commercially available from Evonik Degussa GmbH, Momentive Performance Materials, etc. can be used. These silane coupling agents may be used alone, or two or more thereof may be used in combination.

A content of the silane coupling agent based on 100 parts by mass of silica is preferably 1.0 part by mass or more, more preferably 3.0 parts by mass or more, further preferably 5.0 parts by mass or more, from the viewpoint of enhancing dispersibility of silica. Moreover, it is preferably 20 parts by mass or less, more preferably 15 parts by mass or less, further preferably 12 parts by mass or less, from the viewpoints of cost and processability.

### (Other compounding agents)

The rubber composition according to the present embodiment can appropriately comprise compounding agents conventionally and generally used in the tire industry, for example, a softening agent, wax, processing aid, stearic acid, zinc oxide, an antioxidant, a vulcanizing agent, a vulcanization accelerator, and the like, in addition to the above-described components.

### (Softening agent)

The rubber composition according to the present embodiment preferably comprises a softening agent. Examples of the softening agent include, for example, a resin component, oil, a liquid rubber, an ester-based plasticizing agent, and the like.

The rubber composition according to the present embodiment preferably comprises, as a resin component, at least one selected from a group consisting of a terpene-based resin and a cyclopentadiene-based resin.

The terpene-based resin and the cyclopentadiene-based resin are characterized by a lower SP value than other adhesive resins used for a rubber composition for tire, such as a coumarone resin, a petroleum-based resin (an aliphatic petroleum resin, an aromatic petroleum resin, an alicyclic petroleum resin, etc.), a phenol-based resin, a rosin derivative, and the like. Here, the SP value means a solubility parameter calculated by the Hoy method based on a structure of a compound, showing that the further the SP values of two compounds are apart from each other, the lower the compatibility is. Here, a SP value of water is about 23, and SP values of other adhesive resins are about 9 to 12, and therefore, a terpene resin and a cyclopentadiene-based resin (SP values are about 7.5 to 8.5) each having a lower SP value than other adhesive resins are adhesive resins each having a lower compatibility with water, which are compounded in the rubber composition, so that water repellency of the rubber composition can be improved.

Examples of the terpene-based resin include a polyterpene resin consisting of at least one selected from terpene compounds such as α-pinene, β-pinene, limonene, a dipentene, and the like; an aromatic-modified terpene resin comprising the terpene compound and an aromatic compound as monomer component; a terpene phenol resin comprising the terpene compound and a phenol-based compound as monomer component; and those in which these terpene-based resins are hydrogenated (hydrogenated terpene-based resins). Examples of the aromatic compound used as a raw material for the aromatic-modified terpene resin include, for example, styrene, α-methylstyrene, vinyltoluene, a divinyltoluene, and the like. Examples of the phenol-based compound used as a raw material for the terpene phenol resin include, for example, phenol, bisphenol A, cresol, xylenol, and the like.

Among terpene-based resins, hydrogenated terpene-based resins are preferable because they have a lower SP value, an excellent compatibility with rubber components, and can improve water repellency, and a hydrogenated polyterpene resin is more preferable because it allows for hydrogen addition close to 100% and further has an excellent durability. Hydrogenation treatment to a terpene-based resin can be performed by a known method, and commercially available hydrogenated terpene-based resins can also be used in the present embodiment.

Other resin components are not particularly limited, examples of which include a petroleum resin, a rosin-based resin, a phenol-based resin, and the like, which are commonly used in the tire industry. These resin components may be used alone, or two or more thereof may be used in combination.

A softening point of a resin component (preferably the terpene-based resin or the cyclopentadiene-based resin) is preferably 60°C or higher, more preferably 65°C or higher, from the viewpoint of wet grip performance. Moreover, it is preferably 150°C or lower, more preferably 140°C or lower, further preferably 130°C or lower, from the viewpoints of processability and improvement in dispersibility of a rubber component with a filler. Besides, the softening point of the resin component is measured by the above-described measuring method. In addition, a glass transition temperature of the resin component that can be used in the present embodiment is about 40 to 50°C lower than the softening point.

A total content of resin components (preferably a terpene-based resin and/or a cyclopentadiene-based resin) when compounded based on 100 parts by mass of the rubber component is preferably 1 part by mass or more, more preferably 3 parts by mass or more, further preferably 5 parts by mass or more, particularly preferably 7 parts by mass or more, from the viewpoint of the effects of the present invention. Moreover, the content is preferably 40 parts by mass or less, more preferably 30 parts by mass or less, further preferably 25 parts by mass or less, particularly preferably 20 parts by mass or less, from the viewpoint that hardness, moldability, and viscosity of the rubber composition can be appropriately secured.

Examples of oil include, for example, a process oil, vegetable fats and oils, animal fats and oils, and the like. Examples of the process oil include a paraffin-based process oil (mineral oil), a naphthene-based process oil, an aroma-based process oil, and the like. Specific examples of the process oil include, for example, MES (Mild Extract Solvated), DAE (Distillate Aromatic Extract), TDAE (Treated Distillate Aromatic Extract), TRAE (Treated Residual Aromatic Extract), RAE (Residual al Aromatic Extract), and the like. Moreover, as an environmental measure, process oil having a low content of a polycyclic aromatic compound (PCA) can also be used. Examples of the process oil having a low content of a PCA content include MES, TDAE, a heavy naphthenic oil, and the like. In addition, from the viewpoint of life cycle assessment, those obtained by purifying a waste oil after being used in a rubber mixer or an engine, or a waste cooking oil used in a restaurant may be used.

A content of oil when compounded based on 100 parts by mass of the rubber component is preferably 1 part by mass or more, more preferably 3 parts by mass or more, further preferably 5 parts by mass or more, from the viewpoint of processability. Moreover, it is preferably 80 parts by mass or less, more preferably 60 parts by mass or less, further preferably 40 parts by mass or less, from the viewpoint of abrasion resistance.

The liquid rubber is not particularly limited as long as it is a polymer in a liquid state at a normal temperature (25°C), examples of which include, for example, a liquid butadiene rubber (a liquid BR), a liquid styrene-butadiene rubber (a liquid SBR), a liquid isoprene rubber (a liquid IR), a liquid styrene-isoprene rubber (a liquid SIR), a liquid farnesene rubber, and the like. These liquid rubbers may be used alone, or two or more thereof may be used in combination.

A content of the liquid rubber when compounded based on 100 parts by mass of the rubber component is preferably 1 part by mass or more, more preferably 3 parts by mass or more, further preferably 5 parts by mass or more. Moreover, the content is preferably 30 parts by mass or less, more preferably 20 parts by mass or less, further preferably 10 parts by mass or less.

Examples of the ester-based plasticizing agent include, for example, dibutyl adipate (DBA), diisobutyl adipate (DIBA), dioctyl adipate (DOA), bis(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. These ester-based plasticizing agents may be used alone, or two or more thereof may be used in combination.

A content of the ester-based plasticizing agent when compounded based on 100 parts by mass of the rubber component is preferably 1 part by mass or more, more preferably 2 parts by mass or more, further preferably 3 parts by mass or more, particularly preferably 5 parts by mass or more. Moreover, the content of the ester-based plasticizing agent is preferably 30 parts by mass or less, more preferably 20 parts by mass or less, further preferably 15 parts by mass or less.

A content of the softening agent when compounded based on 100 parts by mass of the rubber component (a total amount of a plurality of softening agents when used in combination) is preferably 1 part by mass or more, more preferably 3 parts by mass or more, further preferably 5 parts by mass or more, particularly preferably 7 parts by mass or more. Moreover, the content of the softening agent is preferably 100 parts by mass or less, more preferably 80 parts by mass or less, further preferably 60 parts by mass or less, particularly preferably 40 parts by mass or less.

The wax is not particularly limited, and any of those commonly used in the tire industry can be appropriately used, examples of which include, for example, a petroleum-based wax, a mineral-based wax, a synthetic wax, and the like. Among them, a petroleum-based wax is preferable. Examples of the petroleum-based wax include, for example, a paraffin wax, a microcrystalline wax, specially selected waxes thereof, and the like. Among them, a paraffin wax is preferable. Besides, the wax according to the present embodiment shall not comprise stearic acid. As the wax, for example, those commercially available from Ouchi Shinko Chemical Industry Co., Ltd., Nippon Seiro Co., Ltd., Paramelt B.V., etc. can be used. These waxes may be used alone, or two or more thereof may be used in combination.

A content of wax when compounded based on 100 parts by mass of the rubber component is preferably 0.5 parts by mass or more, more preferably 1.0 part by mass or more, further preferably 1.5 parts by mass or more, from the viewpoint of weather resistance of a rubber. Moreover, it is preferably 10 parts by mass or less, more preferably 5.0 parts by mass or less, from the viewpoint of preventing whitening of a tire due to bloom.

Examples of processing aid include, for example, a fatty acid metal salt, a fatty acid amide, an amide ester, a silica surface active agent, a fatty acid ester, a mixture of a fatty acid metal salt and an amide ester, a mixture of a fatty acid metal salt and a fatty acid amide, and the like. These processing aid may be used alone, or two or more thereof may be used in combination. As processing aid, for example, those commercially available from Schill+Seilacher GmbH, Performance Additives, etc. can be used.

A content of processing aid when compounded based on 100 parts by mass of the rubber component is preferably 0.5 parts by mass or more, more preferably 1.0 part by mass or more, further preferably 1.5 parts by mass or more, from the viewpoint of exhibiting an effect of improving processability. Moreover, it is preferably 10 parts by mass or less, more preferably 8.0 parts by mass or less, from the viewpoints of abrasion resistance and breaking strength.

Examples of the antioxidant include, but not particularly limited to, for example, amine-based, quinoline-based, quinone-based, phenol-based and imidazole-based compounds, and a carbamic acid metal salt, preferably, phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, and the like, and quinoline-based antioxidants such as 2,2,4-trimethyl-1,2-dihydroquinoline polymer, 6-ethoxy-2,2,4-trimethyl-1,2-dihydroquinoline, and the like. These antioxidants may be used alone, or two or more thereof may be used in combination.

A content of the antioxidant when compounded based on 100 parts by mass of the rubber component is preferably 0.5 parts by mass or more, more preferably 1.0 part by mass or more, further preferably 1.5 parts by mass or more, from the viewpoint of ozone crack resistance of a rubber. Moreover, it is preferably 10 parts by mass or less, more preferably 5.0 parts by mass or less, from the viewpoints of abrasion resistance and wet grip performance.

A content of stearic acid when compounded based on 100 parts by mass of the rubber component is preferably 0.5 parts by mass or more, more preferably 1.0 part by mass or more, further preferably 1.5 parts by mass or more, from the viewpoint of processability. Moreover, it is preferably 10 parts by mass or less, more preferably 5.0 parts by mass or less, from the viewpoint of vulcanization rate.

A content of zinc oxide when compounded based on 100 parts by mass of the rubber component is preferably 0.5 parts by mass or more, more preferably 1.0 part by mass or more, further preferably 1.5 parts by mass or more, from the viewpoint of processability. Moreover, it is preferably 10 parts by mass or less, more preferably 5.0 parts by mass or less, from the viewpoint of abrasion resistance.

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used.

A content of sulfur when compounded as a vulcanizing agent based on 100 parts by mass of the rubber component is preferably 0.1 parts by mass or more, more preferably 0.3 parts by mass or more, further preferably 0.5 parts by mass or more, from the viewpoint of securing a sufficient vulcanization reaction. Moreover, it is preferably 5.0 parts by mass or less, more preferably 4.0 parts by mass or less, further preferably 3.0 parts by mass or less, particularly preferably 2.5 parts by mass or less, from the viewpoint of preventing deterioration. Besides, a content of the vulcanizing agent when an oil-containing sulfur is used as the vulcanizing agent shall be a total content of pure sulfur comprised in the oil-containing sulfur.

Examples of vulcanizing agents other than sulfur include, for example, an alkylphenol-sulfur chloride condensate, sodium hexamethylene-1,6-bisthiosulfate dihydrate, 1,6-bis(N,N'-dibenzylthiocarbamoyldithio)hexane, and the like. As these vulcanizing agents other than sulfur, those commercially available from Taoka Chemical Co., Ltd., LANXESS, Flexsys, etc. can be used.

Examples of the vulcanization accelerator include, for example, a sulfenamide-based vulcanization accelerator, a thiazole-based vulcanization accelerator, a thiuram-based vulcanization accelerator, a guanidine-based vulcanization accelerator, a dithiocarbamate-based vulcanization accelerator, a caprolactam disulfide, and the like. These vulcanization accelerators may be used alone, or two or more thereof may be used in combination. Among them, one or more vulcanization accelerators selected from the group consisting of a sulfenamide-based vulcanization accelerator, a thiazole-based vulcanization accelerator, and a guanidine-based vulcanization accelerator are preferable, from the viewpoint that desired effects can be obtained more appropriately.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), and the like. Among them, TBBS and CBS are preferable.

Examples of the thiazole-based vulcanization accelerator include, for example, 2-mercaptobenzothiazole (MBT) or a salt thereof, di-2-benzothiazolyl disulfide (MBTS), 2-(2,4-dinitrophenyl)mercaptobenzothiazole, 2-(2,6-diethyl-4-morpholinothio)benzothiazole, and the like. Among them,

MBTS and MBT are preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenylguanidine, 1,3-di-o-biphenylguanidine, 1,3-di-o-cumenyl-2-propionylguanidine, and the like. Among them, DPG is preferable.

A content of the vulcanization accelerator when compounded based on 100 parts by mass of the rubber component (a total amount of a plurality of vulcanization accelerators when used in combination) is preferably 1.0 part by mass or more, more preferably 2.0 parts by mass or more, further preferably 2.5 parts by mass or more. Moreover, the content is preferably 8.0 parts by mass or less, more preferably 7.0 parts by mass or less, further preferably 6.0 parts by mass or less. When the content of the vulcanization accelerator is within the above-described ranges, breaking strength and elongation tend to be secured.

### [Production of rubber composition and tire]

The rubber composition according to the present embodiment can be produced by a known method. For example, it can be produced by kneading each of the above-described components using a rubber kneading apparatus such as an open roll, a closed type kneader, and the like (Bunbury mixer, kneader, etc.).

The kneading step includes, for example, a base kneading step of kneading compounding agents and additives other than vulcanizing agents and vulcanization accelerators and a final kneading (F kneading) step of adding vulcanizing agents and vulcanization accelerators to the kneaded product obtained by the base kneading step and kneading them. Furthermore, the base kneading step can be divided into a plurality of steps, if desired.

A kneading condition is not particularly limited. Examples of kneading include, for example, in the base kneading step, a method of kneading at a discharge temperature of 150 to 170°C for 3 to 10 minutes, and in the final kneading step, a method of kneading at 70 to 110°C for 1 to 5 minutes. A vulcanization condition is not particularly limited. Examples of vulcanization include, for example, a method of vulcanizing at 150 to 200°C for 10 to 30 minutes.

The tires comprising treads comprising a first layer 6 and a second layer 7 can be manufactured by a usual method using the responding rubber composition, respectively. That is, the tire can be produced by extruding an unvulcanized rubber composition corresponding to each rubber layer, obtained by the above-described method, into a shape of each layer with an extruder equipped with a mouthpiece having a predetermined shape, attaching it together with other tire members on a tire forming machine, and molding them by a usual method to form an unvulcanized tire, followed by heating and pressurizing this unvulcanized tire in a vulcanizing machine. A vulcanization condition is not particularly limited. Examples of vulcanization include, for example, a method of vulcanizing at 150 to 200°C for 10 to 30 minutes.

### [Application of tire]

The tire according to the present embodiment can be appropriately used as a tire for a passenger car, a tire for a truck/bus, a motorcycle tire, or a racing tire. Among them, it is preferably used as a tire for a passenger car. Besides, the tire for a passenger car is a tire on the premise that it is mounted on a car running on four wheels and refers to one having a maximum load capacity of 1000 kg or less. Here, the maximum load capacity refers to a maximum load capacity in a standard system including a standard, on which the tire is based, defined for each tire by the standard. For example, it refers to the "maximum load capacity" based on the load index (LI) in JATMA, "LOAD CAPACITY" in ETRTO, or the "maximum value" described in the table "TIRE LOAD LIMITS AT VARIOUS COLD INFLATION PRESSURES" in TRA, to which references are made in this order, and if there is an applicable size at the time of the reference, the maximum load capacity conforms to its standard. Moreover, the tire according to the present embodiment can be used as an all-season tire, a summer tire, or a winter tire such as a studless tire.

### EXAMPLE

Examples that are considered to be preferable in implementation (Examples) are shown below, but the scope of the present invention is not limited to Examples. Considering tires having a first layer and a second layer of a tread obtained according to the compounding in Tables 1, 2, and 3 using various chemicals shown below, results calculated based on the following evaluation methods are shown in Tables 4 and 5.

### <Production of rubber composition and tire>

Various chemicals used in Examples and Comparative examples are collectively shown below.
NR: TSR20
BR: Ubepol BR (Registered Trademark) 150B manufactured by Ube Industries, Ltd. (cis content: 97 mol%, Mw: 440,000)
SBR1: SBR1502 manufactured by JSR Corporation (an unmodified E-SBR, styrene content: 23.5% by mass, vinyl content: 16 mol%, Mw: 500,000, non-oil extended)
SBR2: Modified S-SBR synthesized according to Production example below (styrene content: 25% by mass, vinyl content: 57 mol%, non-oil-extended)
Carbon black 1: Show Black N220 manufactured by Cabot Japan K.K. (N₂SA: 111 m²/g)
Carbon black 2: Seast NH manufactured by Tokai Carbon Co., Ltd. (N351, N₂SA: 74 m²/g)
Silica: Ultrasil VN3 manufactured by Evonik Degussa GmbH (N₂SA: 175 m²/g)
Silane coupling agent: Si266 manufactured by Evonik Degussa GmbH (bis(3-triethoxysilylpropyl)disulfide)
Vulcanized rubber particle: Powder of powdered rubber W2-A manufactured by ASAHI SAISEIGOMU Co., Ltd. (30 mesh vulcanized rubber powder)
Oil: Diana Process NH-705 manufactured by Idemitsu Kosan Co., Ltd.
Resin component: P125 manufactured by Yasuhara Chemical Co., Ltd. (hydrogenated polyterpene resin, softening point: 125°C)
Zinc oxide: Zinc oxide No. 1 manufactured by Mitsui Mining & Smelting Co., Ltd.
Antioxidant 1: Nocrac 6C manufactured by Ouchi Shinko Chemical Industry Co., Ltd. (N-(1,3-dimethylbutyl)-N'-phenyl-p-phenylenediamine)
Antioxidant 2: Nocrac FR manufactured by Ouchi Shinko Chemical Industry Co., Ltd. (2,2,4-trimethyl-1,2-dihydroquinoline polymer)
Stearic acid: Bead stearic acid "CAMELLIA" manufactured by NOF CORPORATION
Wax: OZOACE 0355 manufactured by Nippon Seiro Co., Ltd.
Sulfur: Powdered sulfur manufactured by Tsurumi Chemical Industry Co., Ltd. (5% oil-containing powdered sulfur)
Vulcanization accelerator 1: Nocceler D manufactured by Ouchi Shinko Chemical Industry Co., Ltd. (1,3-diphenylguanidine (DPG))
Vulcanization accelerator 2: Nocceler CZ manufactured by Ouchi Shinko Chemical Industry Co., Ltd. (N-cyclohexyl-2-benzothiazolylsulfenamide (CBS))

### Production example 1 (Production of SBR2)

An autoclave reactor subjected to nitrogen purge is charged with cyclohexane, tetrahydrofuran, styrene, and 1,3-butadiene, the temperature of the contents in the reactor is adjusted to 20°C, and then n-butyllithium was added to initiate polymerization. The polymerization is performed under an adiabatic condition, and the maximum temperature is set to 85°C. When a polymerization conversion rate reaches 99%, 1,3-butadiene was added, and after further polymerization for 5 minutes, 3-diethylaminopropyl triethoxysilane is added as a modifying agent to perform reaction. After completion of the polymerization reaction, 2,6-di-tert-butyl-p-cresol is added, and then the mixture is subjected to removal of solvent by a steam stripping and dried by a heat roll whose temperature is adjusted to 110°C to obtain a SBR2 (modified S-SBR).

### (Examples and Comparative examples)

According to the compounding formulations shown in Tables 1, 2 and 3, using a 1.7 L closed Banbury mixer, all chemicals other than sulfur and vulcanization accelerators are kneaded until the temperature reaches a discharge temperature at 150°C to 160°C for 1 to 10 minutes to obtain a kneaded product. Next, using a twin-screw open roll, sulfur and vulcanization accelerators are added to the kneaded product, and the mixture is kneaded for 4 minutes until the temperature reaches 105°C to obtain an unvulcanized rubber composition. The unvulcanized rubber composition is molded into each shape of the first layer and the second layer of the tread, and attached together with other tire members, preparing an unvulcanized tire, followed by vulcanized at 170°C to obtain each test tire shown in Tables 4 and 5.

### <Measurement of domain size and elastic modulus>

Each rubber test piece after vulcanization is cut out to be produced with 20 mm in length × 30 mm in width × 2 mm in thickness from the first layer and the second layer of the tread part so that a tire circumferential direction becomes on a long side and a tire radial direction becomes a thickness direction. The rubber test piece is placed on a scanning electron microscope (Teneo, manufactured by Thermo Fisher Scientific K.K.) so that a surface parallel to a tread surface becomes a cross section for observation and imaged at an acceleration voltage of 15 kV to obtain an electron microscope image at a magnification of 50 times. Then, in a range of 2.54 mm × 1.69 mm of the obtained image, a domain area derived from a vulcanized rubber particle is calculated, and a ratio of the area occupied to an area of the entire cut section is calculated. This measuring method is performed for 3 fields of view per sample, averaging the measurements to calculate a R₁ and a R₂ from the average value.

### <Measurement of tan δ and glass transition temperature (Tg)>

For each unvulcanized rubber test piece produced by being cut out with 20 mm in length × 4 mm in width × 1 mm in thickness from inside of the first layer and the second layer of the tread part of each test tire so that a tire circumferential direction becomes on a long side and a tire radial direction becomes a thickness direction, using a dynamic viscoelasticity measuring device (EPLEXOR series manufactured by gabo Systemtechnik GmbH), 30°C tan δ is measured under a condition of a temperature at 30°C, a frequency of 10 Hz, an initial strain of 5%, a dynamic strain of ±1%, and an extension mode. Moreover, 70°C tan δ is measured under a condition of a temperature at 70°C, a frequency of 10 Hz, an initial strain of 10%, a dynamic strain ±1%, and an elongation mode. Furthermore, a temperature distribution curve of a tan δ at - 60°C to 40°C is measured under a condition of a frequency of 10 Hz, an initial strain of 1%, an amplitude of ±0.1%, and a temperature rising rate of 3°C/min, and a temperature corresponding to the largest tan δ value in the obtained temperature distribution curve (tan δ peak temperature) is defined as a glass transition temperature (Tg).

### <Measurement of rubber hardness (Hs)>

For each vulcanized rubber test piece produced by being cut out from inside of each rubber layer of the tread part of each test tire so that a tire radial direction becomes a thickness direction, a Shore hardness (Hs) of each rubber test piece at a temperature of 23°C is measured using a durometer type A in accordance with JIS K6253-3: 2012.

### <Tensile test>

For a dumbbell-shaped No. 7 test piece cut out with a thickness of 1 mm from inside of the first layer and second layer of the tread part of each test tire so that a tire circumferential direction becomes a tensile direction and a tire radial direction becomes a thickness direction, a tensile test is performed under a condition of a tensile speed of 3.3 mm/sec in an atmosphere of 23°C in accordance with JIS K 6251: 2017 to measure a modulus at 100% stretching (M100) (MPa).

### <On-ice grip performance>

Each test tire is mounted on four wheels of an FF passenger vehicle with a displacement of 2000 cc, respectively, and a braking distance from a point where a brake is applied at a speed of 15 km/h on an icy road surface is measured. Regarding an inverse value of a braking distance, an evaluation result of each test tire is indicated as an index with a braking distance of the control tire (Comparative example 1 in Table 4, Comparative example 8 in Table 5) being as 100.

**Table 1**

| | Compounding of first layer | | | | | | | | | | | |
|---|---|---|---|---|---|---|---|---|---|---|---|---|
| | A1 | A2 | A3 | A4 | A5 | A6 | A7 | A8 | A9 | A10 | A11 | A12 |
| Compounding amount (part by mass) | | | | | | | | | | | | |
| NR | 10 | 10 | 15 | 15 | 15 | 10 | 10 | 10 | 10 | 10 | 10 | 15 |
| BR | 10 | 10 | 15 | 15 | 15 | 17 | 10 | 10 | 10 | 10 | 10 | 15 |
| SBR1 | 70 | 70 | - | - | 20 | - | 70 | 70 | 70 | 70 | 70 | - |
| SBR2 | 10 | 10 | 70 | 70 | 50 | 73 | 10 | 10 | 10 | 10 | 10 | 70 |
| Carbon black 1 | 30 | 5 | 5 | 5 | 5 | 5 | 30 | 30 | 30 | 30 | 5 | 5 |
| Silica | 30 | 50 | 50 | 50 | 50 | 50 | 30 | 30 | 30 | 30 | 50 | 50 |
| Silane coupling agent | 2.5 | 4.0 | 4.0 | 4.0 | 4.0 | 4.0 | 2.5 | 2.5 | 2.5 | 2.5 | 4.0 | 4.0 |
| Vulcanized rubber particle | 7.5 | 7.2 | 7.2 | 8.8 | 7.2 | 7.2 | - | 1.4 | 10.7 | 15.7 | 15.2 | 7.2 |
| Oil | 5.0 | 5.0 | 5.0 | 5.0 | 5.0 | 5.0 | 5.0 | 5.0 | 5.0 | 5.0 | 5.0 | 5.0 |
| Resin component | - | - | - | - | - | - | - | - | - | - | - | 10 |
| Zinc oxide | 1.0 | 1.0 | 1.0 | 1.0 | 1.0 | 1.0 | 1.0 | 1.0 | 1.0 | 1.0 | 1.0 | 1.0 |
| Antioxidant 1 | 2.0 | 2.0 | 2.0 | 2.0 | 2.0 | 2.0 | 2.0 | 2.0 | 2.0 | 2.0 | 2.0 | 2.0 |
| Antioxidant 2 | 2.0 | 2.0 | 2.0 | 2.0 | 2.0 | 2.0 | 2.0 | 2.0 | 2.0 | 2.0 | 2.0 | 2.0 |
| Stearic acid | 1.0 | 1.0 | 1.0 | 1.0 | 1.0 | 1.0 | 1.0 | 1.0 | 1.0 | 1.0 | 1.0 | 1.0 |
| Wax | 1.0 | 1.0 | 1.0 | 1.0 | 1.0 | 1.0 | 1.0 | 1.0 | 1.0 | 1.0 | 1.0 | 1.0 |
| Sulfur | 1.5 | 1.5 | 1.5 | 1.5 | 1.5 | 1.5 | 1.5 | 1.5 | 1.5 | 1.5 | 1.5 | 1.5 |
| Vulcanization accelerator 1 | 1.0 | 1.0 | 1.0 | 1.0 | 1.0 | 1.0 | 1.0 | 1.0 | 1.0 | 1.0 | 1.0 | 1.0 |
| Vulcanization accelerator 2 | 2.0 | 2.0 | 2.0 | 2.0 | 2.0 | 2.0 | 2.0 | 2.0 | 2.0 | 2.0 | 2.0 | 2.0 |
| Total styrene amount (% by mass) | 19.0 | 19.0 | 17.5 | 17.5 | 17.2 | 18.3 | 19.0 | 19.0 | 19.0 | 19.0 | 19.0 | 17.5 |
| R₁ | 0.05 | 0.05 | 0.05 | 0.06 | 0.05 | 0.05 | 0 | 0.01 | 0.07 | 0.10 | 0.10 | 0.05 |
| 30°C tan δ | 0.23 | 0.18 | 0.13 | 0.13 | 0.14 | 0.12 | 0.23 | 0.23 | 0.23 | 0.23 | 0.18 | 0.15 |
| T_{g} (°C) | -42 | -39 | -19 | -19 | -19 | -19 | -42 | -42 | -42 | -42 | -39 | -22 |
| Shore hardness (Hs) | 63 | 63 | 63 | 63 | 63 | 64 | 64 | 63 | 62 | 62 | 62 | 60 |
| M100 (MPa) | 2.3 | 2.3 | 2.4 | 2.3 | 2.3 | 2.5 | 2.4 | 2.3 | 2.0 | 1.9 | 2.0 | 1.7 |

**Table 2**

| | Compounding of first layer | | | | | | | | | | | |
|---|---|---|---|---|---|---|---|---|---|---|---|---|
| | A13 | A14 | A15 | A16 | A17 | A18 | A19 | A20 | A21 | A22 | A23 | A24 |
| Compounding amount (part by mass) | | | | | | | | | | | | |
| NR | 20 | 20 | 30 | 30 | 30 | 27 | 20 | 20 | 20 | 20 | 20 | 30 |
| BR | - | - | - | - | - | - | - | - | - | - | - | - |
| SBR1 | 70 | 70 | - | - | 20 | - | 70 | 70 | 70 | 70 | 70 | - |
| SBR2 | 10 | 10 | 70 | 70 | 50 | 73 | 10 | 10 | 10 | 10 | 10 | 70 |
| Carbon black 1 | 30 | 5 | 5 | 5 | 5 | 5 | 30 | 30 | 30 | 30 | 5 | 5 |
| Silica | 30 | 50 | 50 | 50 | 50 | 50 | 30 | 30 | 30 | 30 | 50 | 50 |
| Silane coupling agent | 2.5 | 4.0 | 4.0 | 4.0 | 4.0 | 4.0 | 2.5 | 2.5 | 2.5 | 2.5 | 4.0 | 4.0 |
| Vulcanized rubber particle | 7.5 | 7.2 | 7.2 | 8.8 | 7.2 | 7.2 | - | 1.4 | 10.7 | 15.7 | 15.2 | 7.2 |
| Oil | 5.0 | 5.0 | 5.0 | 5.0 | 5.0 | 5.0 | 5.0 | 5.0 | 5.0 | 5.0 | 5.0 | 5.0 |
| Resin component | - | - | - | - | - | - | - | - | - | - | - | 10 |
| Zinc oxide | 1.0 | 1.0 | 1.0 | 1.0 | 1.0 | 1.0 | 1.0 | 1.0 | 1.0 | 1.0 | 1.0 | 1.0 |
| Antioxidant 1 | 2.0 | 2.0 | 2.0 | 2.0 | 2.0 | 2.0 | 2.0 | 2.0 | 2.0 | 2.0 | 2.0 | 2.0 |
| Antioxidant 2 | 2.0 | 2.0 | 2.0 | 2.0 | 2.0 | 2.0 | 2.0 | 2.0 | 2.0 | 2.0 | 2.0 | 2.0 |
| Stearic acid | 1.0 | 1.0 | 1.0 | 1.0 | 1.0 | 1.0 | 1.0 | 1.0 | 1.0 | 1.0 | 1.0 | 1.0 |
| Wax | 1.0 | 1.0 | 1.0 | 1.0 | 1.0 | 1.0 | 1.0 | 1.0 | 1.0 | 1.0 | 1.0 | 1.0 |
| Sulfur | 1.5 | 1.5 | 1.5 | 1.5 | 1.5 | 1.5 | 1.5 | 1.5 | 1.5 | 1.5 | 1.5 | 1.5 |
| Vulcanization accelerator 1 | 1.0 | 1.0 | 1.0 | 1.0 | 1.0 | 1.0 | 1.0 | 1.0 | 1.0 | 1.0 | 1.0 | 1.0 |
| Vulcanization accelerator 2 | 2.0 | 2.0 | 2.0 | 2.0 | 2.0 | 2.0 | 2.0 | 2.0 | 2.0 | 2.0 | 2.0 | 2.0 |
| Total styrene amount (% by mass) | 19.0 | 19.0 | 17.5 | 17.5 | 17.2 | 18.3 | 19.0 | 19.0 | 19.0 | 19.0 | 19.0 | 17.5 |
| R₁ | 0.05 | 0.05 | 0.05 | 0.06 | 0.05 | 0.05 | 0 | 0.01 | 0.07 | 0.10 | 0.10 | 0.05 |
| 30°C tan δ | 0.24 | 0.19 | 0.14 | 0.14 | 0.15 | 0.13 | 0.24 | 0.24 | 0.24 | 0.24 | 0.19 | 0.15 |
| Tg (°C) | -42 | -39 | -19 | -19 | -19 | -19 | -42 | -42 | -42 | -42 | -39 | -22 |
| Shore hardness (Hs) | 65 | 65 | 65 | 65 | 65 | 66 | 66 | 65 | 64 | 64 | 64 | 62 |
| M100 (MPa) | 2.5 | 2.5 | 2.6 | 2.5 | 2.5 | 2.7 | 2.6 | 2.5 | 2.2 | 2.1 | 2.2 | 1.9 |

**Table 3**

| | Compounding of second layer | | | | | | | | |
|---|---|---|---|---|---|---|---|---|---|
| | B1 | B2 | B3 | B4 | B5 | B6 | B7 | B8 | B9 |
| Compounding amount (part by mass) | | | | | | | | | |
| NR | - | - | 60 | 60 | 10 | 90 | - | - | - |
| BR | - | - | 40 | 40 | 90 | 10 | - | - | - |
| SBR1 | 100 | 100 | - | - | - | - | 100 | 100 | 100 |
| Carbon black 1 | 55 | - | - | - | - | - | 55 | 55 | 55 |
| Carbon black 2 | - | 30 | 30 | 30 | 30 | 30 | - | - | - |
| Vulcanized rubber particle | 10.3 | 8.7 | 8.7 | 11.4 | 8.7 | 8.7 | - | 1.4 | 25 |
| Oil | 4.0 | 4.0 | 4.0 | 4.0 | 4.0 | 4.0 | 4.0 | 4.0 | 4.0 |
| Zinc oxide | 2.0 | 2.0 | 2.0 | 2.0 | 2.0 | 2.0 | 2.0 | 2.0 | 2.0 |
| Antioxidant 1 | 2.0 | 2.0 | 2.0 | 2.0 | 2.0 | 2.0 | 2.0 | 2.0 | 2.0 |
| Antioxidant 2 | 2.0 | 2.0 | 2.0 | 2.0 | 2.0 | 2.0 | 2.0 | 2.0 | 2.0 |
| Stearic acid | 2.0 | 2.0 | 2.0 | 2.0 | 2.0 | 2.0 | 2.0 | 2.0 | 2.0 |
| Wax | 2.0 | 2.0 | 2.0 | 2.0 | 2.0 | 2.0 | 2.0 | 2.0 | 2.0 |
| Sulfur | 2.0 | 2.0 | 2.0 | 2.0 | 2.0 | 2.0 | 2.0 | 2.0 | 2.0 |
| Vulcanization accelerator 2 | 1.0 | 1.0 | 1.0 | 1.0 | 1.0 | 1.0 | 1.0 | 1.0 | 1.0 |
| Total styrene amount (% by mass) | 23.5 | 23.5 | 0 | 0 | 0 | 0 | 23.5 | 23.5 | 23.5 |
| R₂ | 0.07 | 0.07 | 0.07 | 0.09 | 0.07 | 0.07 | 0 | 0.01 | 0.20 |
| 70°C tan δ | 0.22 | 0.09 | 0.09 | 0.09 | 0.10 | 0.08 | 0.21 | 0.21 | 0.06 |
| Tq (°C) | -17 | -20 | -30 | -32 | -35 | -30 | -21 | -20 | -16 |
| Shore hardness (Hs) | 67 | 65 | 63 | 63 | 61 | 64 | 68 | 67 | 62 |
| M100 (MPa) | 2.4 | 1.9 | 1.7 | 1.7 | 1.6 | 1.8 | 2.5 | 2.4 | 1.7 |

**Table 4**

| | Example | | | | | | | |
|---|---|---|---|---|---|---|---|---|
| | 1 | 2 | 3 | 4 | 5 | 6 | 7 | 8 |
| Compounding of first layer | A1 | A1 | A2 | A3 | A3 | A3 | A4 | A3 |
| Compounding of second layer | B1 | B1 | B1 | B1 | B2 | B3 | B3 | B4 |

| First layer | | | | | | | | |
|---|---|---|---|---|---|---|---|---|
| Total styrene amount (% by mass) | 19.0 | 19.0 | 19.0 | 17.5 | 17.5 | 17.5 | 17.5 | 17.5 0.05 |
| R₁ | 0.05 | 0.05 | 0.05 | 0.05 | 0.05 | 0.05 | 0.06 | |
| 30°C tan δ | 0.23 | 0.23 | 0.18 | 0.13 | 0.13 | 0.13 | 0.13 | 0.13 |
| Tg (°C) | -42 | -42 | -39 | -19 | -19 | -19 | -19 | -19 |
| Shore hardness (Hs) | 63 | 63 | 63 | 63 | 63 | 63 | 63 | 63 |
| M100 (MPa) | 2.3 | 2.3 | 2.3 | 2.4 | 2.4 | 2.4 | 2.3 | 2.4 |

| Second layer | | | | | | | | |
|---|---|---|---|---|---|---|---|---|
| Total styrene amount (% by mass) | 23.5 | 23.5 | 23.5 | 23.5 | 23.5 | 0 | 0 | 0 |
| R₂ | 0.07 | 0.07 | 0.07 | 0.07 | 0.07 | 0.07 | 0.07 | 0.09 |
| 70°C tan δ | 0.22 | 0.22 | 0.22 | 0.22 | 0.09 | 0.09 | 0.09 | 0.09 |
| Tg(°C) | -17 | -17 | -17 | -17 | -20 | -30 | -30 | -32 |
| Shore hardness (Hs) | 67 | 67 | 67 | 67 | 65 | 63 | 63 | 63 |
| M100 (MPa) | 2.4 | 2.4 | 2.4 | 2.4 | 1.9 | 1.7 | 1.7 | 1.7 |

| Tire | | | | | | | | |
|---|---|---|---|---|---|---|---|---|
| t1 in mm | 8.7 | 6.3 | 6.3 | 6.3 | 6.3 | 6.3 | 6.3 | 6.3 |
| t2 in mm | 0.3 | 2.7 | 2.7 | 2.7 | 2.7 | 2.7 | 2.7 | 2.7 |
| H in mm | 7.0 | 7.0 | 7.0 | 7.0 | 7.0 | 7.0 | 7.0 | 7.0 |
| t1/t2 | 32 | 2.3 | 2.3 | 2.3 | 2.3 | 2.3 | 2.3 | 2.3 |
| t1/H | 1.25 | 0.90 | 0.90 | 0.90 | 0.90 | 0.90 | 0.90 | 0.90 |
| R₁ × (t1/t2) | 1.60 | 0.12 | 0.12 | 0.12 | 0.12 | 0.12 | 0.14 | 0.12 |
| On-ice grip performance | 112 | 124 | 134 | 142 | 150 | 154 | 158 | 142 |

| | Example | | | | | | | |
|---|---|---|---|---|---|---|---|---|
| | 9 | 10 | 11 | 12 | 13 | 14 | 15 | 16 |
| Compounding of first layer | A3 | A3 | A5 | A6 | A3 | A3 | A12 | A11 |
| Compounding of second layer | B3 | B3 | B3 | B3 | B5 | B6 | B3 | B9 |

| First layer | | | | | | | | |
|---|---|---|---|---|---|---|---|---|
| Total styrene amount (% by mass) | 17.5 | 17.5 | 17.2 | 18.3 | 17.5 | 17.5 | 17.5 | 19.0 |
| R₁ | 0.05 | 0.05 | 0.05 | 0.05 | 0.05 | 0.05 | 0.05 | 0.10 |
| 30°C tan δ | 0.13 | 0.13 | 0.14 | 0.12 | 0.13 | 0.13 | 0.15 | 0.18 |
| Tg (°C) | -19 | -19 | -19 | -19 | -19 | -19 | -22 | -39 |
| Shore hardness (Hs) | 63 | 63 | 63 | 64 | 63 | 63 | 60 | 62 |
| M100 (MPa) | 2.4 | 2.4 | 2.3 | 2.5 | 2.4 | 2.4 | 1.7 | 2.0 |

| Second layer | | | | | | | | |
|---|---|---|---|---|---|---|---|---|
| Total styrene amount (% by mass) | 0 | 0 | 0 | 0 | 0 | 0 | 0 | 23.5 |
| R₂ | 0.07 | 0.07 | 0.07 | 0.07 | 0.07 | 0.07 | 0.07 | 0.20 |
| 70°C tan δ | 0.09 | 0.09 | 0.09 | 0.09 | 0.10 | 0.08 | 0.09 | 0.06 |
| Tg (°C) | -30 | -30 | -30 | -30 | -35 | -30 | -30 | -16 |
| Shore hardness (Hs) | 63 | 63 | 63 | 63 | 61 | 64 | 63 | 62 |
| M100 (MPa) | 1.7 | 1.7 | 1.7 | 1.7 | 1.6 | 1.8 | 1.7 | 1.7 |

| Tire | | | | | | | | |
|---|---|---|---|---|---|---|---|---|
| t1 in mm | 2.7 | 7.7 | 6.3 | 6.3 | 6.3 | 6.3 | 6.3 | 6.3 |
| t2 in mm | 6.3 | 1.3 | 2.7 | 2.7 | 2.7 | 2.7 | 2.7 | 2.7 |
| H in mm | 7.0 | 7.0 | 7.0 | 7.0 | 7.0 | 7.0 | 7.0 | 7.0 |
| t1/t2 | 0.43 | 5.7 | 2.3 | 2.3 | 2.3 | 2.3 | 2.3 | 2.3 |
| t1/H | 0.39 | 1.09 | 0.90 | 0.90 | 0.90 | 0.90 | 0.90 | 0.90 |
| R₁ × (t1/t2) | 0.02 | 0.28 | 0.12 | 0.12 | 0.12 | 0.12 | 0.12 | 0.23 |
| On-ice grip performance | 144 | 144 | 146 | 156 | 154 | 144 | 146 | 154 |

| | Comparative example | | | | | | | |
|---|---|---|---|---|---|---|---|---|
| | 1 | 2 | 3 | 4 | 5 | 6 | 7 | |
| Compounding of first layer | A7 | A8 | A1 | A9 | A10 | A10 | A11 | |
| Compounding of second layer | B7 | B1 | B8 | B8 | B1 | B1 | B1 | |

| First layer | | | | | | | | |
|---|---|---|---|---|---|---|---|---|
| Total styrene amount (% by mass) | 19.0 | 19.0 | 19.0 | 19.0 | 19.0 | 19.0 | 19.0 | |
| R₁ | 0 | 0.01 | 0.05 | 0.07 | 0.10 | 0.10 | 0.10 | |
| 30°C tan δ | 0.23 | 0.23 | 0.23 | 0.23 | 0.23 | 0.23 | 0.18 | |
| Tg (°C) | -42 | -42 | -42 | -42 | -42 | -42 | -39 | |
| Shore hardness (Hs) | 64 | 63 | 63 | 62 | 62 | 62 | 62 | |
| M100 (MPa) | 2.4 | 2.3 | 2.3 | 2.0 | 1.9 | 1.9 | 2.0 | |

| Second layer | | | | | | | | |
|---|---|---|---|---|---|---|---|---|
| Total styrene amount (% by mass) | 23.5 | 23.5 | 23.5 | 23.5 | 23.5 | 23.5 | 23.5 | |
| R₂ | 0 | 0.07 | 0.01 | 0.01 | 0.07 | 0.07 | 0.07 | |
| 70°C tan δ | 0.21 | 0.22 | 0.21 | 0.21 | 0.22 | 0.22 | 0.22 | |
| Tg (°C) | -21 | -17 | -20 | -20 | -17 | -17 | -17 | |
| Shore hardness (Hs) | 68 | 67 | 67 | 67 | 67 | 67 | 67 | |
| M100 (MPa) | 2.5 | 2.4 | 2.4 | 2.4 | 2.4 | 2.4 | 2.4 | |

| Tire | | | | | | | | |
|---|---|---|---|---|---|---|---|---|
| t1 in mm | 8.7 | 8.7 | 8.7 | 8.7 | 8.7 | 3.6 | 3.6 | |
| t2 in mm | 0.3 | 0.3 | 0.3 | 0.3 | 0.3 | 5.4 | 5.4 | |
| H in mm | 7.0 | 7.0 | 7.0 | 7.0 | 7.0 | 7.0 | 7.0 | |
| t1/t2 | 32 | 32 | 32 | 32 | 32 | 0.67 | 0.67 | |
| t1/H | 1.25 | 1.25 | 1.25 | 1.25 | 1.25 | 0.52 | 0.52 | |
| R₁ × (t1/t2) | 0 | 0.32 | 0.16 | 2.24 | 3.20 | 0.07 | 0.07 | |
| On-ice grip performance | 100 | 80 | 78 | 84 | 86 | 88 | 90 | |

**Table 5**

| | Example | | | | | | | |
|---|---|---|---|---|---|---|---|---|
| | 17 | 18 | 19 | 20 | 21 | 22 | 23 | 24 |
| Compounding of first layer | A13 | A13 | A14 | A15 | A15 | A15 | A16 | A15 |
| Compounding of second layer | B1 | B1 | B1 | B1 | B2 | B3 | B3 | B4 |

| First layer | | | | | | | | |
|---|---|---|---|---|---|---|---|---|
| Total styrene amount (% by mass) | 19.0 | 19.0 | 19.0 | 17.5 | 17.5 | 17.5 | 17.5 | 17.5 |
| R₁ | 0.05 | 0.05 | 0.05 | 0.05 | 0.05 | 0.05 | 0.06 | 0.05 |
| 30°C tan δ | 0.24 | 0.24 | 0.19 | 0.14 | 0.14 | 0.14 | 0.14 | 0.14 |
| Tg (°C) | -42 | -42 | -39 | -19 | -19 | -19 | -19 | -19 |
| Shore hardness (Hs) | 65 | 65 | 65 | 65 | 65 | 65 | 65 | 65 |
| M100 (MPa) | 2.5 | 2.5 | 2.5 | 2.6 | 2.6 | 2.6 | 2.6 | 2.6 |

| Second layer | | | | | | | | |
|---|---|---|---|---|---|---|---|---|
| Total styrene amount (% by mass) | 23.5 | 23.5 | 23.5 | 23.5 | 23.5 | 0 | 0 | 0 |
| R₂ | 0.07 | 0.07 | 0.07 | 0.07 | 0.07 | 0.07 | 0.07 | 0.09 |
| 70°C tan δ | 0.22 | 0.22 | 0.22 | 0.22 | 0.09 | 0.09 | 0.09 | 0.09 |
| Tg (°C) | -17 | -17 | -17 | -17 | -20 | -30 | -30 | -32 |
| Shore hardness (Hs) | 67 | 67 | 67 | 67 | 65 | 63 | 63 | 63 |
| M100 (MPa) | 2.4 | 2.4 | 2.4 | 2.4 | 1.9 | 1.7 | 1.7 | 1.7 |

| Tire | | | | | | | | |
|---|---|---|---|---|---|---|---|---|
| t1 in mm | 8.7 | 6.3 | 6.3 | 6.3 | 6.3 | 6.3 | 6.3 | 6.3 |
| t2 in mm | 0.3 | 2.7 | 2.7 | 2.7 | 2.7 | 2.7 | 2.7 | 2.7 |
| H in mm | 7.0 | 7.0 | 7.0 | 7.0 | 7.0 | 7.0 | 7.0 | 7.0 |
| t1/t2 | 32 | 2.3 | 2.3 | 2.3 | 2.3 | 2.3 | 2.3 | 2.3 |
| t1/H | 1.25 | 0.90 | 0.90 | 0.90 | 0.90 | 0.90 | 0.90 | 0.90 |
| R₁ × (t1/t2) | 1.60 | 0.12 | 0.12 | 0.12 | 0.12 | 0.12 | 0.14 | 0.12 |
| On-ice grip performance | 116 | 134 | 146 | 156 | 160 | 164 | 168 | 156 |

| | Example | | | | | | | |
|---|---|---|---|---|---|---|---|---|
| | 25 | 26 | 27 | 28 | 29 | 30 | 31 | 32 |
| Compounding of first layer | A15 | A15 | A17 | A18 | A15 | A15 | A24 | A23 |
| Compounding of second layer | B3 | B3 | B3 | B3 | B5 | B6 | B3 | B9 |

| First layer | | | | | | | | |
|---|---|---|---|---|---|---|---|---|
| Total styrene amount (% by mass) | 17.5 | 17.5 | 17.2 | 18.3 | 17.5 | 17.5 | 17.5 | 19.0 |
| R₁ | 0.05 | 0.05 | 0.05 | 0.05 | 0.05 | 0.05 | 0.05 | 0.10 |
| 30°C tan δ | 0.14 | 0.14 | 0.15 | 0.13 | 0.14 | 0.14 | 0.15 | 0.19 |
| Tg (°C) | -19 | -19 | -19 | -19 | -19 | -19 | -22 | -39 |
| Shore hardness (Hs) | 65 | 65 | 65 | 66 | 65 | 65 | 62 | 64 |
| M100 (MPa) | 2.6 | 2.6 | 2.5 | 2.7 | 2.6 | 2.6 | 1.9 | 2.2 |

| Second layer | | | | | | | | |
|---|---|---|---|---|---|---|---|---|
| Total styrene amount (% by mass) | 0 | 0 | 0 | 0 | 0 | 0 | 0 | 23.5 |
| R₂ | 0.07 | 0.07 | 0.07 | 0.07 | 0.07 | 0.07 | 0.07 | 0.20 |
| 70°C tan δ | 0.09 | 0.09 | 0.09 | 0.09 | 0.10 | 0.08 | 0.09 | 0.06 |
| Tg (°C) | -30 | -30 | -30 | -30 | -35 | -30 | -30 | -16 |
| Shore hardness (Hs) | 63 | 63 | 63 | 63 | 61 | 64 | 63 | 62 |
| M100 (MPa) | 1.7 | 1.7 | 1.7 | 1.7 | 1.6 | 1.8 | 1.7 | 1.7 |

| Tire | | | | | | | | |
|---|---|---|---|---|---|---|---|---|
| t1 in mm | 2.7 | 7.7 | 6.3 | 6.3 | 6.3 | 6.3 | 6.3 | 6.3 |
| t2 in mm | 6.3 | 1.3 | 2.7 | 2.7 | 2.7 | 2.7 | 2.7 | 2.7 |
| H in mm | 7.0 | 7.0 | 7.0 | 7.0 | 7.0 | 7.0 | 7.0 | 7.0 |
| t1/t2 | 0.43 | 5.7 | 2.3 | 2.3 | 2.3 | 2.3 | 2.3 | 2.3 |
| t1/H | 0.39 | 1.09 | 0.90 | 0.90 | 0.90 | 0.90 | 0.90 | 0.90 |
| R₁ × (t1/t2) | 0.02 | 0.28 | 0.12 | 0.12 | 0.12 | 0.12 | 0.12 | 0.23 |
| On-ice grip performance | 154 | 152 | 160 | 170 | 168 | 158 | 160 | 168 |

| | Comparative example | | | | | | | |
|---|---|---|---|---|---|---|---|---|
| | 8 | 9 | 10 | 11 | 12 | 13 | 14 | |
| Compounding of first layer | A19 | A20 | A13 | A21 | A22 | A22 | A23 | |
| Compounding of second layer | B7 | B1 | B8 | B8 | B1 | B1 | B1 | |

| First layer | | | | | | | | |
|---|---|---|---|---|---|---|---|---|
| Total styrene amount (% by mass) | 19.0 | 19.0 | 19.0 | 19.0 | 19.0 | 19.0 | 19.0 | |
| R₁ | 0 | 0.01 | 0.05 | 0.07 | 0.10 | 0.10 | 0.10 | |
| 30°C tan δ | 0.24 | 0.24 | 0.24 | 0.24 | 0.24 | 0.24 | 0.19 | |
| Tg (°C) | -42 | -42 | -42 | -42 | -42 | -42 | -39 | |
| Shore hardness (Hs) | 66 | 65 | 65 | 64 | 64 | 64 | 64 | |
| M100 (MPa) | 2.6 | 2.5 | 2.5 | 2.2 | 2.1 | 2.1 | 2.2 | |

| Second layer | | | | | | | | |
|---|---|---|---|---|---|---|---|---|
| Total styrene amount (% by mass) | 23.5 | 23.5 | 23.5 | 23.5 | 23.5 | 23.5 | 23.5 | |
| R₂ | 0 | 0.07 | 0.01 | 0.01 | 0.07 | 0.07 | 0.07 | |
| 70°C tan δ | 0.21 | 0.22 | 0.21 | 0.21 | 0.22 | 0.22 | 0.22 | |
| Tg (°C) | -21 | -17 | -20 | -20 | -17 | -17 | -17 | |
| Shore hardness (Hs) | 68 | 67 | 67 | 67 | 67 | 67 | 67 | |
| M100 (MPa) | 2.5 | 2.4 | 2.4 | 2.4 | 2.4 | 2.4 | 2.4 | |

| Tire | | | | | | | | |
|---|---|---|---|---|---|---|---|---|
| t1 in mm | 8.7 | 8.7 | 8.7 | 8.7 | 8.7 | 3.6 | 3.6 | |
| t2 in mm | 0.3 | 0.3 | 0.3 | 0.3 | 0.3 | 5.4 | 5.4 | |
| H in mm | 7.0 | 7.0 | 7.0 | 7.0 | 7.0 | 7.0 | 7.0 | |
| t1/t2 | 32 | 32 | 32 | 32 | 32 | 0.67 | 0.67 | |
| t1/H | 1.25 | 1.25 | 1.25 | 1.25 | 1.25 | 0.52 | 0.52 | |
| R₁ × (t1/t2) | 0 | 0.32 | 0.16 | 2.24 | 3.20 | 0.07 | 0.07 | |
| On-ice grip performance | 100 | 80 | 78 | 84 | 86 | 88 | 90 | |

### <Embodiments>

Examples of embodiments of the present invention are shown below.
[1] A tire comprising a tread part, wherein the tread part has a first layer constituting a tread surface and a second layer adjacent to the inner side of the first layer in a tire radial direction, wherein the first layer and the second layer are each composed of a rubber composition comprising a rubber component and a vulcanized rubber particle, wherein, in a cut section parallel to the tread surface of the first layer, a ratio R₁ of a domain area derived from the vulcanized rubber particle to an area of the entire cut section is 0.05 or more and less than 0.50, preferably 0.05 or more and less than 0.40, more preferably 0.05 or more and less than 0.30, further preferably 0.05 or more and less than 0.20, wherein, in a cut section parallel to a tread surface of the second layer, a ratio R₂ of a domain area derived from the vulcanized rubber particle to an area of the entire cut section is greater than 0.05 and 0.50 or less, preferably greater than 0.05 and 0.40 or less, more preferably greater than 0.05 and 0.35 or less, further preferably greater than 0.06 and 0.30 or less, and wherein R₂ is larger than R₁.
[2] The tire of [1] above, wherein a ratio (t1/t2) of a thickness t1, in mm, of the first layer to a thickness t2, in mm, of the second layer is less than 19, preferably less than 10, more preferably 0.20 or more and less than 8.0.
[3] The tire of [1] or [2] above, wherein the first layer has a tan δ at 30°C (30°C tan δ) of 0.09 or more and 0.21 or less, preferably 0.11 or more and 0.19 or less.
[4] The tire of any one of [1] to [3] above, wherein the rubber component constituting the first layer comprises a styrene-butadiene rubber.
[5] The tire of any one of [1] to [4] above, wherein a total styrene amount in the rubber component constituting the first layer is 20% by mass or less.
[6] The tire of any one of [1] to [5] above, wherein a glass transition temperature of the first layer is -30°C or higher and -10°C or lower.
[7] The tire of any one of [1] to [6] above, wherein the second layer has a tan δ at 70°C (70°C tan δ) of 0.10 or less.
[8] The tire of any one of [1] to [7] above, wherein a product of the ratio (t1/t2) of the thickness t1, in mm, of the first layer to the thickness t2, in mm, of the second layer and R₁ (R₁ × (t1/t2)) is 0.25 or less, preferably 0.010 or more and 0.20 or less.
[9] The tire of any one of [1] to [8] above, wherein a total content of a butadiene rubber and a styrene-butadiene rubber in the rubber component constituting the first layer is 75% by mass or more.
[10] The tire of any one of [1] to [9] above, wherein a total content of silica and carbon black based on 100 parts by mass of the rubber component in the rubber composition constituting the first layer is 60 parts by mass or less, preferably 20 parts by mass or more and 55 parts by mass or less.
[11] The tire of any one of [1] to [10] above, wherein the rubber composition constituting the first layer comprises at least one selected from a group consisting of a terpene-based resin and a cyclopentadiene-based resin.
[12] The tire of any one of [1] to [11] above, wherein a Shore hardness (Hs) of the second layer is 50 or more and 80 or less, preferably 55 or more and 70 or less.
[13] The tire of any one of [1] to [12] above, wherein a modulus of the first layer at 100% stretching is larger than a modulus of the second layer at 100% stretching.
[14] The tire of any one of [1] to [13] above, wherein a modulus of the first layer at 100% stretching is 0.5 MPa or more, preferably 1.0 MPa or more, more preferably 1.4 MPa or more.
[15] The tire of any one of [2] to [14] above, wherein the tread part has circumferential grooves extending continuously in a tire circumferential direction, and wherein a ratio (t1/H) of t1 to a groove depth H of the deepest part of the circumferential groove is 0.35 to 0.95.

### REFERENCE SIGNS LIST

1. Circumferential groove
2. Land part
3. Tread surface
5. Groove wall
6. First layer
7. Second layer
8. Tread part
H. Groove bottom of circumferential groove
CL. Tire equatorial plane

## Claims

1. A tire comprising a tread part,
wherein the tread part has a first layer constituting a tread surface and a second layer adjacent to the inner side of the first layer in a tire radial direction,
wherein the first layer and the second layer are each composed of a rubber composition comprising a rubber component and a vulcanized rubber particle,
wherein, in a cut section parallel to the tread surface of the first layer, a ratio R₁ of a domain area derived from the vulcanized rubber particle to an area of the entire cut section is 0.05 or more and less than 0.50, preferably 0.05 or more and less than 0.40, more preferably 0.05 or more and less than 0.30, further preferably 0.05 or more and less than 0.20,
wherein, in a cut section parallel to a tread surface of the second layer, a ratio R₂ of a domain area derived from the vulcanized rubber particle to an area of the entire cut section is greater than 0.05 and 0.50 or less, preferably greater than 0.05 and 0.40 or less, more preferably greater than 0.05 and 0.35 or less, further preferably greater than 0.06 and 0.30 or less, and
wherein R₂ is larger than R₁.

2. The tire of claim 1, wherein a ratio (t1/t2) of a thickness t1, in mm, of the first layer to a thickness t2, in mm, of the second layer is less than 19, preferably less than 10, more preferably 0.20 or more and less than 8.0.

3. The tire of claim 1 or 2, wherein the first layer has a tan δ at 30°C (30°C tan δ) of 0.09 or more and 0.21 or less, preferably 0.11 or more and 0.19 or less.

4. The tire of any one of claims 1 to 3, wherein the rubber component constituting the first layer comprises a styrene-butadiene rubber.

5. The tire of any one of claims 1 to 4, wherein a total styrene amount in the rubber component constituting the first layer is 20% by mass or less.

6. The tire of any one of claims 1 to 5, wherein a glass transition temperature of the first layer is -30°C or higher and -10°C or lower.

7. The tire of any one of claims 1 to 6, wherein the second layer has a tan δ at 70°C (70°C tan δ) of 0.10 or less.

8. The tire of any one of claims 1 to 7, wherein a product of the ratio (t1/t2) of the thickness t1, in mm, of the first layer to the thickness t2, in mm, of the second layer and R₁ (R₁ × (t1/t2)) is 0.25 or less, preferably 0.010 or more and 0.20 or less.

9. The tire of any one of claims 1 to 8, wherein a total content of a butadiene rubber and a styrene-butadiene rubber in the rubber component constituting the first layer is 75% by mass or more.

10. The tire of any one of claims 1 to 9, wherein a total content of silica and carbon black based on 100 parts by mass of the rubber component in the rubber composition constituting the first layer is 60 parts by mass or less, preferably 20 parts by mass or more and 55 parts by mass or less.

11. The tire of any one of claims 1 to 10, wherein the rubber composition constituting the first layer comprises at least one selected from a group consisting of a terpene-based resin and a cyclopentadiene-based resin.

12. The tire of any one of claims 1 to 11, wherein a Shore hardness (Hs) of the second layer is 50 or more and 80 or less, preferably 55 or more and 70 or less.

13. The tire of any one of claims 1 to 12, wherein a modulus of the first layer at 100% stretching is larger than a modulus of the second layer at 100% stretching.

14. The tire of any one of claims 1 to 13, wherein the modulus of the second layer at 100% stretching is 0.5 MPa or more, preferably 1.0 MPa or more, more preferably 1.4 MPa or more.

15. The tire of any one of claims 2 to 14, wherein the tread part has circumferential grooves extending continuously in a tire circumferential direction, and
wherein a ratio (t1/H) of t1 to a groove depth H of the deepest part of the circumferential groove is 0.35 to 0.95.
